(19)

Europäisches Patentamt

European Patent Office

Office européen des brevets

(11)  EP 4 513 348 A1

(12)  **EUROPEAN PATENT APPLICATION**
published in accordance with Art. 153(4) EPC

(43) Date of publication:
26.02.2025  Bulletin 2025/09

(21) Application number: 23826401.4

(22) Date of filing: 20.06.2023

(51) International Patent Classification (IPC):
*G06F 16/174* (2019.01)

(52) Cooperative Patent Classification (CPC):
G06F 3/06; G06F 16/174

(86) International application number:
PCT/CN2023/101303

(87) International publication number:
WO 2023/246754 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.06.2022  CN 202210730080
16.09.2022  CN 202211132110

(71) Applicant: Huawei Technologies Co., Ltd.
Shenzhen, Guangdong 518129 (CN)

(72) Inventors:
• ZHU, Hongde
  Shenzhen, Guangdong 518129 (CN)
• DONG, Ruliang
  Shenzhen, Guangdong 518129 (CN)
• CHEN, Zehui
  Shenzhen, Guangdong 518129 (CN)
• LUO, Sizhe
  Shenzhen, Guangdong 518129 (CN)

(74) Representative: Körber, Martin Hans
Mitscherlich PartmbB
Patent- und Rechtsanwälte
Karlstraße 7
80333 München (DE)

(54)  **DATA DEDUPLICATION METHOD AND RELATED SYSTEM**

(57)  This application provides a data deduplication method, including: receiving a write request; writing a first data block in the write request into a storage device; writing metadata such as a fingerprint and a logical address of the first data block into a first partition that is in a plurality of partitions of a metadata management structure and that is determined based on a feature of the first data block; and deleting the metadata of the first data block in the first partition and deleting the first data block from the storage device based on address information of the first data block when a fingerprint that is the same as the fingerprint of the first data block exists in the first partition. In the method, the metadata management structure is actively partitioned, and metadata of a data block is written into a partition corresponding to a feature of the data block, so that infrequently updated data is prevented from being evicted because resources are occupied by frequently updated data, thereby improving a deduplication ratio.

FIG. 5

EP 4 513 348 A1

**Description**

This application claims priorities to Chinese Patent Application No. 202210730080.0, filed with the China National Intellectual Property Administration on June 24, 2022 and entitled "DATA DEDUPLICATION METHOD", and to Chinese Patent Application No. 202211132110.4, filed with the China National Intellectual Property Administration on September 16, 2022 and entitled "DATA DEDUPLICATION METHOD AND RELATED SYSTEM", both of which are incorporated herein by reference in their entireties.

**TECHNICAL FIELD**

This application relates to the field of storage technologies, and in particular, to a data deduplication method and apparatus, a storage system, a computer-readable storage medium, and a computer program product.

**BACKGROUND**

With development of the computing industry, value of data is fully released, and a data center is expanded from a scale of petabytes (petabyte, PB) to a scale of zettabytes (zettabyte, ZB). A large amount of redundant data exists in the data center. Statistics show that 50% and 85% of data are redundant in two main application scenarios of a primary storage system and a backup storage system, respectively. How to effectively reduce redundant data to reduce storage costs has become a hot research direction.

In the industry, data deduplication (Data Deduplication, DD) is usually used to reduce data redundancy. Data deduplication may also be referred to as deduplication. Specifically, data is divided into blocks, and fingerprints of the data blocks are calculated based on content of the data blocks; and then fingerprints of different data blocks are compared to identify and delete a data block with duplicate content, so that data redundancy is eliminated.

The fingerprint of the data block is usually written into a log file through write-ahead logging. During deduplication, fingerprints in the log file are sorted through manual or periodic triggering, sorted fingerprints are merged with fingerprints in a fingerprint file, and a data block with duplicate content is deleted based on a merging result.

Data stored in the data center may be classified into frequently updated data and infrequently updated data based on update frequency. However, a proportion of the frequently updated data is usually greater than a proportion of the infrequently updated data. The frequently updated data is usually difficult to deduplicate. In other words, a proportion of data that is difficult to deduplicate is high. In this case, resources are occupied, and a proportion of space allocated to the infrequently updated data is small. As a result, the data is easily evicted, and a deduplication ratio is reduced.

**SUMMARY**

This application provides a data deduplication method. In the method, a metadata management structure is actively partitioned, and metadata such as a fingerprint and address information of a data block is written into a partition corresponding to a feature of the data block, so that infrequently updated data is prevented from being evicted because resources are occupied by frequently updated data, thereby improving a deduplication ratio. This application further provides an apparatus, a storage system, a computer-readable storage medium, and a computer program product that correspond to the foregoing method.

According to a first aspect, this application provides a data deduplication method. The method may be applied to a storage system, including a centralized storage system or a distributed storage system. The centralized storage system may be further classified into a disk-controller integrated centralized storage system or a disk-controller separated centralized storage system. The distributed storage system may be further classified into a distributed storage system with coupled storage and compute or a distributed storage system with decoupled storage and compute. The centralized storage system has an engine. The engine includes a controller. The controller may include a processor and a memory. The processor may load program code in the memory, to perform the data deduplication method in this application. Similarly, the distributed storage system includes a computing node and a storage node. The computing node includes a processor and a memory. The processor may load program code in the memory, to perform the data deduplication method in this application.

Specifically, the storage system receives a write request, where the write request includes a first data block. Then the storage system writes the first data block into a storage device (for example, a hard disk), and then writes metadata of the first data block into a first partition in a plurality of partitions of a metadata management structure. The first partition is determined based on a feature of the first data block. The metadata of the first data block includes a fingerprint and address information of the first data block. The storage system deletes the metadata of the first data block in the first partition and deletes the first data block from the storage device based on the address information of the first data block when a fingerprint that is the same as the fingerprint of the first data block exists in the first partition.

In the method, metadata of data blocks with different features may be written into different partitions of the metadata management structure. For example, metadata of a frequently updated data block may be written into a partition with a small capacity, and metadata of an infrequently updated data block may be written into a partition with a large capacity. Therefore, infrequently updated data is prevented from being evicted because resources are occupied by frequently updated data, so that a deduplication ratio is improved.

In some possible implementations, the feature of the first data block is the fingerprint of the first data block. It should be noted that different data blocks may correspond to a same fingerprint. For example, during backup, a plurality of data blocks may correspond to a same fingerprint. When writing the metadata of the first data block into the metadata management structure, the storage system may first determine heat of the fingerprint corresponding to the first data block, determine, based on the heat of the fingerprint corresponding to the first data block, the first partition that is in the plurality of partitions of the metadata management structure and that corresponds to the heat, and then write the metadata of the first data block into the first partition.

In the method, the storage system determines the heat of the fingerprint corresponding to the first data block, and writes the first data block into the corresponding first partition based on the heat, so that infrequently updated data is prevented from being evicted because resources are occupied by frequently updated data, thereby improving a deduplication ratio.

In some possible implementations, the address information of the first data block includes a logical address of the first data block. Correspondingly, after writing the metadata of the first data block into the first partition, the storage system may further update the heat of the fingerprint corresponding to the first data block. The storage system may determine heat of the logical address of the first data block, and add the heat of the logical address to the heat of the fingerprint corresponding to the first data block, to update the heat of the fingerprint corresponding to the first data block.

In the method, the heat of the fingerprint is updated by adding the heat of the logical address to the heat of the fingerprint corresponding to the data block, so that a reference can be provided for subsequent metadata writing.

In some possible implementations, the write request may further include a second data block, and heat of a fingerprint corresponding to the second data block may be greater than the heat of the fingerprint corresponding to the first data block. Correspondingly, the storage system may further write the second data block into the storage device, and write metadata of the second data block into a second partition in the plurality of partitions of the metadata management structure. A capacity of the second partition is less than a capacity of the first partition.

In the method, data blocks with different fingerprint heat are written into different partitions of the metadata management structure, so that metadata of a data block with low heat is prevented from being evicted because resources are occupied by metadata of a data block with high heat, thereby improving a deduplication ratio.

In some possible implementations, the write request may further include a third data block, and a fingerprint of the third data block is the same as the fingerprint of the first data block. When the metadata of the first data block is written, the heat of the fingerprint corresponding to the first data block is less than preset heat. When metadata of the third data block is written, heat of the fingerprint corresponding to the third data block is greater than the preset heat. In this case, the storage system may write the metadata of the third data block into the second partition, and move metadata of a data block having a same fingerprint as the third data block in the first partition to the second partition.

In this way, as data blocks are continuously written, a storage location of metadata may be adjusted. For example, metadata of a data block with high fingerprint heat is moved to the second partition, so that storage space is reserved in the first partition for metadata of a data block with low fingerprint heat, and metadata of data blocks having a same fingerprint is stored in the second partition, to support the second partition in triggering deduplication, thereby further improving a deduplication ratio.

In some possible implementations, the storage system may also write the metadata of the third data block into the second partition, and evict metadata of a data block having a same fingerprint as the third data block in the first partition without moving the metadata to the second partition. Therefore, moving overheads can be reduced, and in addition, storage space can be reserved in the first partition for metadata of a data block with low fingerprint heat, so that a deduplication ratio is further improved.

In some possible implementations, capacities of the plurality of partitions of the metadata management structure are determined based on a partitioning decision model. The partitioning decision model is used to predict a corresponding partitioning benefit after each of preset partition capacity combinations is applied to the metadata management structure, and determine a partition capacity combination with a largest partitioning benefit as the capacities of the plurality of partitions of the metadata management structure, and the partitioning benefit is determined based on at least one of a deduplication ratio and a partition adjustment cost.

In the method, the partitioning decision model is constructed, and the metadata management structure is actively partitioned by using the partitioning decision model, so that the following case is avoided: Infrequently updated data is evicted because resources of the infrequently updated data are occupied by frequently updated data, and as a result, a deduplication ratio is reduced.

In some possible implementations, the partitioning benefit may be the deduplication ratio, and the preset partition capacity combinations may include a first partition capacity combination. The partitioning decision model may estimate a hit rate of data to predict a deduplication ratio after the partition capacity combination is applied to the data management structure.

Specifically, the partitioning decision model predicts, in the following manner, a corresponding deduplication ratio after the first partition capacity combination is applied to the metadata management structure: obtaining a workload feature corresponding to each of a plurality of partitions formed when the first partition capacity combination is applied to the metadata management structure; obtaining, based on the workload feature corresponding to each partition, a data distribution corresponding to each partition; and obtaining the deduplication ratio based on the data distribution corresponding to each partition and a capacity of each partition.

In the method, the data distribution corresponding to each partition is fitted based on the workload feature corresponding to each partition, and a hit rate may be predicted based on the data distribution and the partition capacity that correspond to each partition, to predict a corresponding deduplication ratio after a partition capacity combination is applied. A partition capacity combination with a largest deduplication ratio may be predicted at low costs without a need to actually run the storage system, so that a service requirement can be met.

In some possible implementations, considering that a workload may change, adjustment to the capacities of the partitions is further supported. For example, the storage system may periodically adjust the capacities of the partitions. In a specific engineering implementation process, operations such as partition initialization need to be performed again during partition adjustment. This generates a partition adjustment cost. The partitioning decision model may predict the partition adjustment cost based on partition capacity proportions before and after adjustment. The partitioning decision model may predict a partitioning benefit based on a return and the partition adjustment cost. For example, the partitioning decision model may use a difference between the predicted return and the predicted partition adjustment cost as the predicted partitioning benefit.

In the method, the partitioning benefit is reconstructed, so that the partitioning benefit can be evaluated more accurately and properly. A partition capacity combination determined by using maximization of the reconstructed partitioning benefit as an objective has larger reference value, so that a balance between the deduplication ratio and the partition adjustment cost can be implemented.

In some possible implementations, the storage system may periodically adjust the capacities of the plurality of partitions of the metadata management structure, and when an adjustment moment arrives, determine, based on a partitioning benefit, a partition capacity combination, or a workload feature corresponding to each partition that corresponds to a cycle before the adjustment moment, whether to adjust the capacities of the plurality of partitions.

In the method, it is determined, by using feedback information such as the partitioning benefit, the partition capacity combination, or the workload feature corresponding to each partition that corresponds to the cycle before the adjustment moment, whether to adjust the capacities of the partitions, so that the partitions can be flexibly adjusted based on a workload change, and it is ensured as much as possible that good partitioning benefits are obtained in different phases.

In some possible implementations, the storage system may store, in the first partition, a fingerprint that is the same as the fingerprint of the first data block, and when a quantity of fingerprints in the first partition that are the same as the fingerprint of the first data block reaches a preset threshold, delete the metadata of the first data block, and delete the first data block from the storage device based on the address information of the first data block.

The preset threshold may be set based on an empirical value. For example, the preset threshold may be set to 1, and in this case, a fingerprint that is the same as that of the first data block exists in the first partition, and the storage system deletes the metadata of the first data block and the first data block. For another example, the preset threshold may be set to 2, and in this case, when fingerprints of two data blocks in the first partition are the same as the fingerprint of the first data block, the storage system deletes the metadata of the first data block and the first data block, and further, the storage system retains one of the two data blocks whose fingerprints are the same as the fingerprint of the first data block and metadata of the data block, and deletes the other data block and metadata of the other data block.

When the preset threshold is set to a small value, redundant data blocks and metadata may be deleted in a timely manner. When the preset threshold is set to a large value, a quantity of deduplication times may be reduced, to avoid affecting normal running of a service because frequent deduplication occupies a large quantity of resources.

In some possible implementations, the address information of the first data block is the logical address of the first data block. The storage system may further write the logical address and a physical address of the first data block into an address mapping table. Correspondingly, when deleting the first data block, the storage system may obtain the physical address of the first data block from the address mapping table based on the logical address of the first data block, then find the first data block from the storage device based on the physical address, and delete the first data block.

In the method, the storage system directly locates the first data block based on single-hop mapping from the logical address to the physical address in the address mapping table, to shorten a search time and improve deduplication efficiency.

In some possible implementations, after deleting the metadata of the first data block in the first partition, the storage system may further modify the physical address of the first data block in the forward mapping table to the fingerprint of the first data block.

In the method, a deduplicated data block can be relocated, so that subsequently, a physical address of a data block having a same fingerprint can be found based on a fingerprint, and the data block can be accessed by accessing the physical address.

In some possible implementations, when at least one partition in an inverse mapping table meets an eviction condition, the storage system may further evict metadata in the at least one partition.

In the method, metadata eviction is performed on the inverse mapping table, to reduce a metadata size, so that memory overheads are reduced, and system performance is ensured.

According to a second aspect, this application provides a data deduplication apparatus. The apparatus includes:

a communication module, configured to receive a write request, where the write request includes a first data block;
a data writing module, configured to write the first data block into a storage device, where
the data writing module is further configured to write metadata of the first data block into a first partition in a plurality of partitions of a metadata management structure, where the first partition is determined based on a feature of the first data block, and the metadata of the first data block includes a fingerprint and address information of the first data block; and
a deduplication module, configured to delete the metadata of the first data block in the first partition and delete the first data block from the storage device based on the address information of the first data block when a fingerprint that is the same as the fingerprint of the first data block exists in the first partition.

In some possible implementations, the feature of the first data block is the fingerprint corresponding to the first data block, and the data writing module is specifically configured to:

determine heat of the fingerprint corresponding to the first data block;
determine, based on the heat of the fingerprint corresponding to the first data block, the first partition that is in the plurality of partitions of the metadata management structure and that corresponds to the heat; and
write the metadata of the first data block into the first partition.

In some possible implementations, the data writing module is further configured to:

after writing the metadata of the first data block into the first partition, determine heat of a logical address of the first data block; and
add the heat of the logical address to the heat of the fingerprint corresponding to the first data block, to update the heat of the fingerprint corresponding to the first data block.

In some possible implementations, the write request further includes a second data block, heat of a fingerprint corresponding to the second data block is greater than the heat of the fingerprint corresponding to the first data block, and the data writing module is further configured to:
write the second data block into the storage device, and write metadata of the second data block into a second partition in the plurality of partitions of the metadata management structure, where a capacity of the second partition is less than a capacity of the first partition.

In some possible implementations, capacities of the plurality of partitions of the metadata management structure are determined based on a partitioning decision model, the partitioning decision model is used to predict a corresponding partitioning benefit after each of preset partition capacity combinations is applied to the metadata management structure, and determine a partition capacity combination with a largest partitioning benefit as the capacities of the plurality of partitions of the metadata management structure, and the partitioning benefit is determined based on at least one of a deduplication ratio and a partition adjustment cost.

In some possible implementations, the partitioning benefit is the deduplication ratio, the preset partition capacity combinations include a first partition capacity combination, and the partitioning decision model predicts, in the following manner, a corresponding deduplication ratio after the first partition capacity combination is applied to the metadata management structure:

obtaining a workload feature corresponding to each of a plurality of partitions formed when the first partition capacity combination is applied to the metadata management structure;
obtaining, based on the workload feature corresponding to each partition, a data distribution corresponding to each partition; and
obtaining the deduplication ratio based on the data distribution corresponding to each partition and a capacity of each partition.

In some possible implementations, the apparatus further includes a partitioning module, and the partitioning module is configured to:

periodically adjust the capacities of the plurality of partitions of the metadata management structure; and
when an adjustment moment arrives, determine, based on a partitioning benefit, a partition capacity combination, or a workload feature corresponding to each partition that corresponds to a cycle before the adjustment moment, whether to adjust the capacities of the plurality of partitions.

In some possible implementations, the deduplication module is specifically configured to:
when a fingerprint that is the same as the fingerprint of the first data block exists in the first partition, and a quantity of fingerprints in the first partition reaches a preset threshold, delete the metadata of the first data block, and delete the first data block from the storage device based on the address information of the first data block.

In some possible implementations, the address information of the first data block is the logical address of the first data block, and the data writing module is further configured to:

write the logical address and a physical address of the first data block into an address mapping table; and
the deduplication module is specifically configured to:

obtain the physical address of the first data block from the address mapping table based on the logical address of the first data block; and
find the first data block from the storage device based on the physical address, and delete the first data block.

In some possible implementations, the deduplication module is further configured to:
after deleting the metadata of the first data block in the first partition, modify the physical address of the first data block in the address mapping table to the fingerprint of the first data block.

In some possible implementations, the apparatus further includes:
an eviction module, configured to: when at least one partition in an inverse mapping table meets an eviction condition, evict metadata in the at least one partition.

According to a third aspect, this application provides a computer cluster. The computer cluster includes at least one computer, and the at least one computer includes at least one processor and at least one storage. The at least one processor and the at least one storage communicate with each other. The at least one processor is configured to execute instructions stored in the at least one storage, so that the computer or the computer cluster performs the data deduplication method according to any one of the first aspect or the implementations of the first aspect.

According to a fourth aspect, this application provides a computer-readable storage medium. The computer-readable storage medium stores instructions, and the instructions instruct a computer or a computer cluster to perform the data deduplication method according to any one of the first aspect or the implementations of the first aspect.

According to a fifth aspect, this application provides a computer program product including instructions. When the computer program product runs on a computer or a computer cluster, the computer or the computer cluster is enabled to perform the data deduplication method according to any one of the first aspect or the implementations of the first aspect.

In this application, the implementations provided in the foregoing aspects may be further combined to provide more implementations.

**BRIEF DESCRIPTION OF DRAWINGS**

To describe the technical methods in embodiments of this application more clearly, the following briefly describes the accompanying drawings that need to be used in the embodiments.

FIG. 1 is a diagram of a system architecture of a centralized storage system according to an embodiment of this application;
FIG. 2 is a diagram of a system architecture of a distributed storage system according to an embodiment of this application;
FIG. 3 is a schematic diagram of metadata management performed through write-ahead logging according to an embodiment of this application;
FIG. 4 is a schematic diagram of metadata management performed by using a log file and an inverse mapping table according to an embodiment of this application;
FIG. 5 is a flowchart of a data deduplication method according to an embodiment of this application;

FIG. 6A and FIG. 6B are a flowchart of a data deduplication method according to an embodiment of this application;

FIG. 7 is a schematic diagram of system resource feature extraction according to an embodiment of this application;

FIG. 8 is a schematic diagram of feature merging according to an embodiment of this application;

FIG. 9 is a schematic diagram of structured feature obtaining according to an embodiment of this application;

FIG. 10 is a schematic flowchart of partitioning decision modeling according to an embodiment of this application;

FIG. 11 is a schematic flowchart of evaluation policy selection according to an embodiment of this application;

FIG. 12 is a schematic diagram of an application scenario of a data deduplication method according to an embodiment of this application;

FIG. 13 is a schematic flowchart of applying a data deduplication method to a global cache according to an embodiment of this application; and

FIG. 14 is a schematic diagram of a structure of a data deduplication apparatus according to an embodiment of this application.

## DESCRIPTION OF EMBODIMENTS

Terms "first" and "second" in embodiments of this application are used only for description purposes, and cannot be understood as an indication or an implication of relative importance or an implicit indication of a quantity of indicated technical features. Therefore, a feature limited by "first" or "second" may explicitly or implicitly include one or more such features.

Some technical terms used in embodiments of this application are first described.

Data deduplication (Data Deduplication, DD), which may also be referred to as deduplication, is a data reduction solution in which duplicate data is deleted, so that only one piece of data is stored for same data in a storage medium, thereby reducing data storage space. Deduplication may be specifically dividing data into blocks, and calculating fingerprints (fingerprint, FP) of the data blocks based on content of the data blocks; and then comparing fingerprints of different data blocks to identify and delete a data block with duplicate content, so that data redundancy is eliminated.

A fingerprint is identity information that is determined based on content of a data block and that is used to identify the data block. The fingerprint of the data block may be a message digest obtained by calculating content of the data block by using a message digest algorithm. The message digest algorithm is usually implemented based on a hash function, that is, a hash (hash) function. Therefore, the fingerprint of the data block may alternatively be a hash value determined by using the hash function.

Deduplication may be further classified based on execution time. For example, deduplication may include inline deduplication or post-process deduplication. Inline deduplication means that data is deduplicated before being written into a storage medium (which is referred to as storage, and is, for example, a device such as a hard disk). Inline deduplication is also referred to as inline deduplication. Post-process deduplication means that data is deduplicated after being written into a storage medium (for example, a device such as a hard disk). Post-process deduplication is also referred to as post-process deduplication and post-process deduplication.

The data deduplication method provided in embodiments of this application may be applied to different application scenarios, for example, may be applied to a centralized storage system or a distributed storage system.

In the centralized storage system, one or more primary devices constitute a central node, data is stored on the central node together, and all data processing services of the entire system are deployed on the central node. In other words, in the centralized storage system, a terminal or a client is only responsible for data input and output, and data storage and control processing are completely completed by the central node. A most important characteristic of the centralized system is that a deployment structure is simple, without a need to consider how to deploy a plurality of nodes for a service or consider distributed collaboration between the plurality of nodes.

The centralized storage system may include a disk-controller integrated centralized storage system or a disk-controller separated centralized storage system. Disk-controller integration means that a storage medium (for example, a hard disk) and a controller are integrated. Disk-controller separation means that a storage medium and a controller are separated.

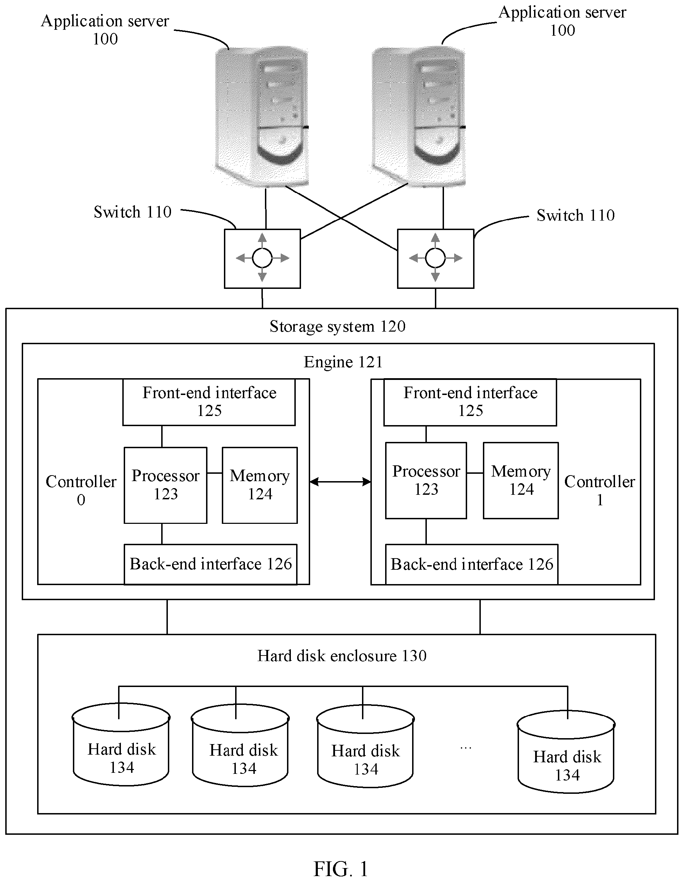

FIG. 1 is a diagram of a system architecture of a centralized storage system to which embodiments of this application are applied. In an application scenario shown in FIG. 1, a user accesses data by using applications. A computer running these applications is referred to as an "application server". An application server 100 may be a physical machine, or may be a virtual machine formed by virtualizing a physical machine. The physical machine includes but is not limited to a desktop computer, a server, a laptop computer, and a mobile device.

The application server accesses the storage system by using a fiber channel switch 110 to access data. However, the switch 110 is only an optional device, and the application server 100 may alternatively directly communicate with a storage system 120 by using a network. Alternatively, the fiber channel switch 110 may be replaced with an Ethernet switch, an infiniband (InfiniBand, IB) switch, a remote direct memory access over converged Ethernet (RDMA over Converged Ethernet, RoCE) switch, or the like.

The storage system 120 shown in FIG. 1 is a centralized storage system. The centralized storage system features a unified portal, and all data from an external device passes through this portal. The portal is an engine 121 of the centralized storage system. The engine 121 is a core component of the centralized storage system, and many advanced functions of the storage system are implemented in the engine 121.

As shown in FIG. 1, the engine 121 has one or more controllers. In FIG. 1, an example in which the engine includes two controllers is used for description. There is a mirror channel between a controller 0 and a controller 1. Therefore, after writing a piece of data into a memory 124 of the controller 0, the controller 0 may send a copy of the data to the controller 1 through the mirror channel, and the controller 1 stores the copy in a local memory 124 of the controller 1. Therefore, either of the controller 0 and the controller 1 is a standby of the other. When the controller 0 is faulty, the controller 1 may take over a service of the controller 0, and when the controller 1 is faulty, the controller 0 may take over a service of the controller 1, to avoid unavailability of the entire storage system 120 caused by a hardware fault. When four controllers are deployed in the engine 121, a mirror channel exists between any two controllers, and therefore either of the any two controllers is a standby of the other.

The engine 121 further includes a front-end interface 125 and a back-end interface 126. The front-end interface 125 is configured to communicate with the application server 100, to provide a storage service for the application server 100. The back-end interface 126 is configured to communicate with a hard disk 134, to expand a capacity of the storage system. The engine 121 may be connected to more hard disks 134 by using the back-end interface 126, so that a quite large storage resource pool is formed.

In terms of hardware, as shown in FIG. 1, the controller 0 includes at least a processor 123 and the memory 124. The processor 123 is a central processing unit (central processing unit, CPU), is configured to process a data access request (for example, a read request or a write request) from the outside (a server or another storage system) of the storage system, and is also configured to process a request generated inside the storage system. For example, when receiving, by using the front-end interface 125, write requests sent by the application server 100, the processor 123 temporarily stores data in the write requests in the memory 124. When a total amount of data in the memory 124 reaches a specific threshold, the processor 123 sends the data stored in the memory 124 to the hard disk 134 by using the back-end interface for persistent storage.

The memory 124 is an internal storage that directly exchanges data with the processor. Data may be written into or read from the memory 124 quite quickly anytime, and the memory 124 serves as a temporary data storage of an operating system or another running program. The memory includes at least two types of memories. For example, the memory may be a random access memory or a read-only memory (Read-Only Memory, ROM). For example, the random access memory is a dynamic random access memory (Dynamic Random Access Memory, DRAM) or a storage class memory (Storage Class Memory, SCM). The DRAM is a semiconductor memory, and is a volatile memory (volatile memory) device like most random access memories (Random Access Memory, RAM). The SCM uses a composite storage technology that combines both a conventional storage apparatus feature and a storage feature. The storage class memory can provide a higher read/write speed than a hard disk, but is slower than the DRAM in terms of an access speed and cheaper than the DRAM in terms of costs. However, the DRAM and the SCM are merely examples for description in the embodiments. The memory may further include another random access memory, for example, a static random access memory (Static Random Access Memory, SRAM). For example, the read-only memory may be a programmable read-only memory (Programmable Read-Only Memory, PROM) or an erasable programmable read-only memory (Erasable Programmable Read-Only Memory, EPROM). In addition, the memory 124 may alternatively be a dual in-line memory module (Dual In-line Memory Module, DIMM for short), namely, a module including a dynamic random access memory (DRAM), or may be a solid state disk (Solid State Disk, SSD). In an actual application, a plurality of memories 124 and memories 124 of different types may be configured in the controller 0. A quantity and types of memories 113 are not limited in this embodiment. In addition, the memory 124 may be configured, so that the memory 124 has a power failure protection function. The power failure protection function means that when the system suffers from a powered failure and then is powered on again, data stored in the memory 124 is not lost. A memory with a power failure protection function is referred to as a non-volatile memory.

The memory 124 stores a software program, and the processor 123 may manage the hard disk by running the software program in the memory 124, for example, abstract the hard disk into a storage resource pool, and then divide the storage resource pool into logic unit number devices (logic unit number device, LUN) for the server to use. The LUN herein is actually the hard disk seen on the server. Certainly, some centralized storage systems are also file servers, and can provide file sharing services for the server.

Hardware components and software structures of the controller 1 (and other controllers that are not shown in FIG. 1) are similar to those of the controller 0, and details are not described herein again.

FIG. 1 shows a disk-controller separated centralized storage system. In the system, the engine 121 may not have a hard disk slot, and the hard disk 134 may be placed in a hard disk enclosure 130. Based on a type of a communication protocol between the engine 121 and the hard disk enclosure 130, the hard disk enclosure 130 may be a serial attached small computer system interface (Serial Attached Small Computer System Interface, SAS) hard disk enclosure, or may be a non-volatile memory express (non-volatile memory express, NVMe) hard disk enclosure, an Internet protocol (Internet Protocol, IP) hard disk enclosure, or another type of hard disk enclosure. The SAS hard disk enclosure uses an SAS 3.0 protocol. Each enclosure supports 25 SAS hard disks. The engine 121 is connected to the hard disk enclosure 130 through an onboard SAS interface or SAS interface module. The NVMe hard disk enclosure is more like a complete computer system. An NVMe hard disk is inserted into the NVMe hard disk enclosure. The NVMe hard disk enclosure is further connected to the engine 121 through an RDMA port.

The back-end interface 126 communicates with the hard disk enclosure 130. The back-end interface 126 exists in the engine 121 in a form of an adapter card. One engine 121 may use two or more back-end interfaces 126 to connect to a plurality of hard disk enclosures 130. Alternatively, the adapter card may be integrated on a mainboard. In this case, the adapter card may communicate with the processor 112 through a PCIE bus.

It should be noted that FIG. 1 shows only one engine 121. However, in an actual application, the storage system may include two or more engines 121, and redundancy or load balancing is performed between the plurality of engines 121.

The storage system 120 shown in FIG. 1 is a disk-controller separated storage system. In some possible implementations, the centralized storage system may alternatively be a disk-controller integrated storage system. In the disk-controller integrated storage system, the engine 121 may have a hard disk slot, and the hard disk 134 may be directly deployed in the engine 121. The back-end interface 126 is an optional configuration. When storage space of the system is insufficient, the back-end interface 126 may be used to connect to more hard disks or hard disk enclosures.

A distributed storage system is a system in which data is stored on a plurality of independent storage nodes in a scattered manner. The distributed storage system uses a scalable system structure, and uses the plurality of storage nodes to share storage load. This improves system reliability, availability, and access efficiency, and further makes the system easily expanded.

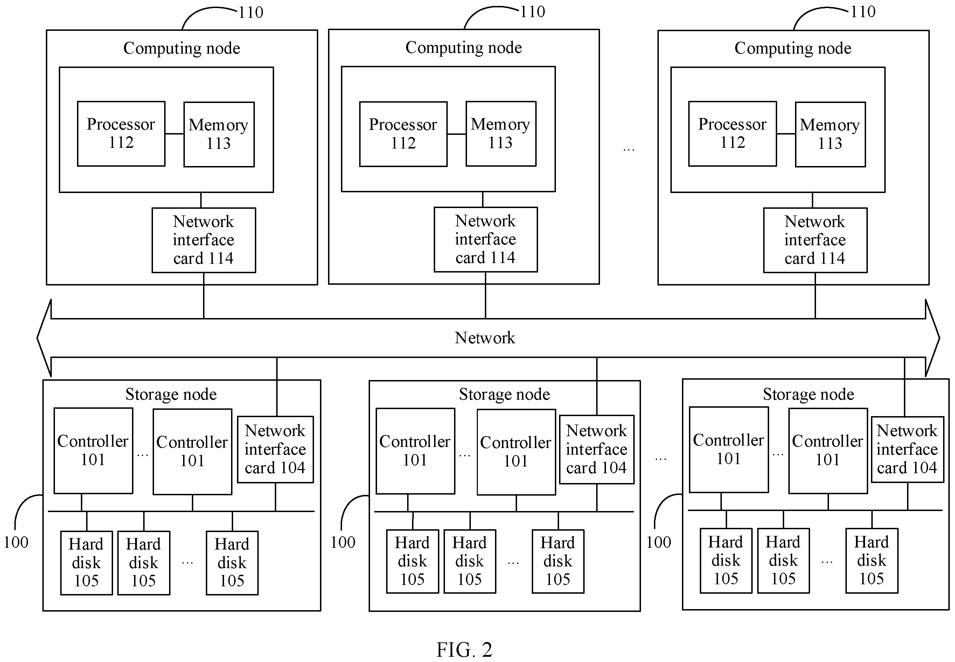

As shown in FIG. 2, a storage system provided in this embodiment includes a computing node cluster and a storage node cluster. The computing node cluster includes one or more computing nodes 110 (FIG. 2 shows three computing nodes 110, but the one or more computing nodes are not limited to three computing nodes 110), and the computing nodes 110 may communicate with each other. The computing node 110 is a computing device, for example, a server, a desktop computer, or a controller of a storage array. In terms of hardware, as shown in FIG. 2, the computing node 110 includes at least a processor 112, a memory 113, and a network interface card 114. The processor 112 is a central processing unit (central processing unit, CPU), and is configured to process a data access request from the outside of the computing node 110 or a request generated inside the computing node 110. For example, when receiving write requests sent by a user, the processor 112 temporarily stores data in the write requests in the memory 113. When a total amount of data in the memory 113 reaches a specific threshold, the processor 112 sends the data stored in the memory 113 to a storage node 100 for persistent storage. In addition, the processor 112 is further configured to perform data computing or processing, for example, metadata management, deduplication, data compression, storage space virtualization, and address translation. FIG. 2 shows only one processor 112. In an actual application, there are usually a plurality of processors 112. One processor 112 has one or more processor cores. A quantity of processors and a quantity of processor cores are not limited in this embodiment.

The memory 113 is an internal storage that directly exchanges data with the processor. Data may be written into or read from the memory 113 quite quickly anytime, and the memory 113 serves as a temporary data storage of an operating system or another running program. The memory includes at least two types of memories. For example, the memory may be a random access memory RAM, or may be a read-only memory ROM. In an actual application, a plurality of memories 113 and memories 113 of different types may be configured in the computing node 110. A quantity and types of memories 113 are not limited in this embodiment. In addition, the memory 113 may be configured, so that the memory 113 has a power failure protection function. The power failure protection function means that when the system suffers from a powered failure and then is powered on again, data stored in the memory 113 is not lost. A memory with a power failure protection function is referred to as a non-volatile memory.

The network interface card 114 is configured to communicate with the storage node 100. For example, when a total amount of data in the memory 113 reaches a specific threshold, the computing node 110 may send a request to the storage node 100 by using the network interface card 114, to perform persistent storage on the data. In addition, the computing node 110 may further include a bus, used for communication between components inside the computing node 110. In terms of functions, because a main function of the computing node 110 in FIG. 1 is a computing service, and a remote memory may be used to implement persistent storage during data storage, the computing node 110 has fewer local memories than a conventional server, so that costs and space are reduced. However, this does not mean that the computing node 110 cannot have a local memory. In actual implementation, the computing node 110 may also have a few built-in hard disks or a few external hard disks.

Any computing node 110 may access any storage node 100 in the storage node cluster by using a network. The storage node cluster includes a plurality of storage nodes 100 (FIG. 1 shows three storage nodes 100, but the plurality of storage nodes 100 are not limited to three storage nodes 100). One storage node 100 includes one or more controllers 101, a network interface card 104, and a plurality of hard disks 105. The network interface card 104 is configured to communicate with the computing node 110. The hard disk 105 is configured to store data, and may be a magnetic disk or a storage medium of another type, for example, a solid state disk or a shingled magnetic recording hard disk. The controller 101 is configured to write data into the hard disk 105 or read data from the hard disk 105 according to a data read/write request sent by the computing node 110. In a data reading/writing process, the controller 101 needs to translate an address carried in the data read/write request into an address that can be identified by the hard disk. It can be learned that the controller 101 also has some simple calculation functions.

It should be noted that when the network interface card 114 or the network interface card 104 is an intelligent network interface card, functions such as deduplication of the processor 112 may also be offloaded to the intelligent network interface card. The intelligent network interface card is a network interface card that integrates computing resources, for example, a network interface card having a data processing unit (data processing unit, DPU). The DPU has versatility and programmability of the CPU, but is more specialized, and can run efficiently on a network data packet, a storage request, or an analysis request. The functions such as deduplication are offloaded to the DPU, so that occupation of resources of the CPU can be reduced, and an access path can also be shortened.

The storage system shown in FIG. 2 is a distributed storage system with disaggregated storage. In some possible implementations, the storage system may alternatively be a distributed storage system with coupled storage and compute. The distributed storage system with coupled storage and compute includes a storage cluster (also referred to as a storage node cluster). The storage node cluster may include one or more servers, and the servers may communicate with each other. The server is a device having both a computing capability and a storage capability. In terms of hardware, the server includes at least a processor, a memory, a network interface card, and a hard disk. The processor is configured to process a data access request from the outside (an application server or another server) of the server, and is also configured to process a request generated inside the server. For example, when receiving write requests, the processor temporarily stores data in the write requests in the memory. When a total amount of data in the memory reaches a specific threshold, the processor sends the data stored in the storage to the hard disk for persistent storage. The processor is further configured to perform data computing or processing, for example, metadata management, data deduplication, data compression, data check, storage space virtualization, and address translation.

It should be noted that the foregoing is merely an example for describing the storage system. In another possible implementation of this embodiment of this application, the storage system may alternatively be a distributed storage system in a fully converged architecture or a distributed storage system in a storage fabric architecture. Details are not described herein.

To implement a deduplication function, "two-level metadata mapping" (Two-level Metadata Mapping) usually needs to be introduced to the storage system.

Generally, for example, in a storage system that does not support the deduplication function, the metadata mapping may be direct mapping from a logical block address (Logical Block Address, LBA) to a physical block address (Physical Block Address, PBA). The logical block address is also referred to as a logical address, and the physical block address is also referred to as a physical address. The logical address is an address of logical space presented by a storage medium to a host. When sending a write request or a read request to the storage medium, the host adds the logical address to the write request or the read request. When receiving the write request or the read request, the storage medium obtains the logical address carried in the write request or the read request, performs address translation on the logical address one or more times to determine a physical address, and writes data into the physical address or reads data from the physical address. The LBA is used as an address of data, so that a three-dimensional addressing manner of the physical address based on heads, a cylinder, and a sector is converted into one-dimensional linear addressing, thereby improving addressing efficiency.

The mapping from the logical address to the physical address is single-hop mapping. After the deduplication function is introduced, because the logical address does not match data content, and data can hardly be found if routing is performed based on the logical address, a one-hop route based on a fingerprint needs to be added. Therefore, the single-hop mapping may be changed to two-level mapping from the logical address to the fingerprint and then from the fingerprint to the physical address.

In the storage system shown in FIG. 1 or FIG. 2, a processor (for example, the processor 123 in FIG. 1 or the processor 112 in FIG. 2) may load computer-readable instructions corresponding to the data deduplication method into a memory (for example, the memory 124 in FIG. 1 or the memory 113 in FIG. 2), and then the processor executes the computer-readable instructions to perform the data deduplication method, so that storage space is reduced, and storage performance is improved.

For ease of description, an example in which a storage system performs post-process deduplication on data generated by an application is used for description.

Specifically, when the application writes data, the storage system (for example, a processor in the storage system) may divide the data into blocks. In this example, it is assumed that the data is divided into a plurality of data blocks at a granularity of 4 kilo bytes (kilo byte, KB). Then a deduplication module in the storage system may calculate a fingerprint for each data block of 4 KB, write the fingerprint into a log file, and then write the data block into a disk (write the data block into a storage device such as a hard disk). A user may manually trigger a deduplication operation or set a deduplication cycle. In this way, the application can deliver a deduplication command in response to the deduplication operation of the user, or periodically deliver a deduplication command to the deduplication module. In response to the deduplication command, the deduplication module sorts fingerprints in a log file, merges sorted fingerprints with fingerprints in a fingerprint file, and deletes a data block with duplicate content based on a merging result.

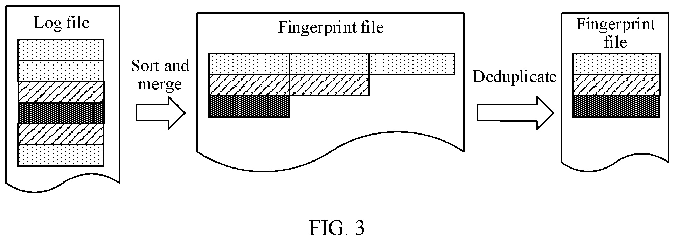

As shown in FIG. 3, for a data block newly written into the storage medium (or a storage device) such as the hard disk, metadata such as a fingerprint of the data block may be managed through write-ahead logging (Write-ahead Logging, WAL). When deduplication is triggered, the deduplication module sorts the fingerprints in the log file, and merges the sorted fingerprints with the fingerprints in the fingerprint file, and based on the merging result, the deduplication module may retain one of a plurality of data blocks having a same fingerprint, delete a data block with duplicate content, and update the fingerprint file. It should be noted that rectangular blocks of different patterns in FIG. 3 represent different fingerprints.

However, workloads (workload) of many applications are usually non-uniform, in other words, data written by the applications to the storage device such as the hard disk for persistent storage may have different update frequency. A proportion of frequently updated data is usually greater than a proportion of infrequently updated data. The frequently updated data is usually difficult to deduplicate. In other words, a proportion of data that is difficult to deduplicate is high. In this case, resources are occupied, and a proportion of space allocated to the infrequently updated data is small. As a result, the data is easily evicted, and a deduplication ratio is reduced.

In view of this, according to the data deduplication method provided in this application, a metadata management structure may be actively partitioned. After a data block in a write request is written into a storage device (for example, a hard disk), metadata such as a fingerprint and address information of the data block is written into a partition that is in a plurality of partitions of the metadata management structure and that corresponds to a feature of the data block. When a fingerprint that is the same as the fingerprint of the data block exists in the partition, the metadata of the data block in the partition is deleted, and the data block is deleted from the storage device based on the address information of the data block.

In this way, metadata of data blocks with different features may be written into different partitions of the metadata management structure. For example, metadata of a frequently updated data block may be written into a partition with a small capacity, and metadata of an infrequently updated data block may be written into a partition with a large capacity. Therefore, infrequently updated data is prevented from being evicted because resources are occupied by frequently updated data, so that a deduplication ratio is improved.

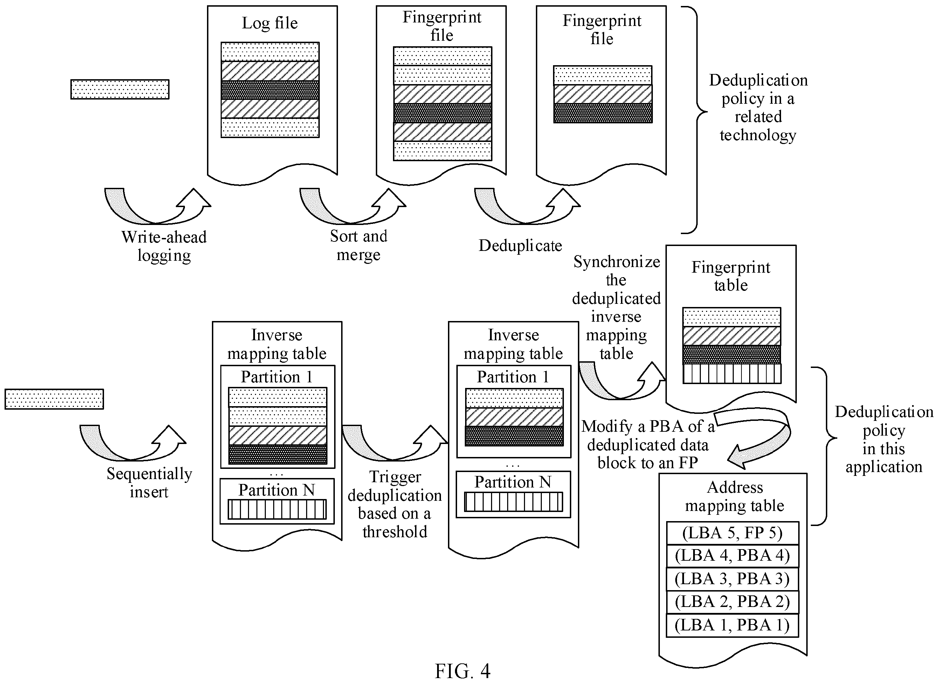

Further, this application introduces a new metadata management structure, namely, an inverse mapping table (Inverse Mapping Table) used to store a mapping relationship from a fingerprint to a logical address of a data block. As shown in FIG. 4, different from metadata management based on a log file, in this embodiment of this application, metadata such as a fingerprint and a logical address is managed by using the inverse mapping table. When a quantity of fingerprints in a partition of the inverse mapping table that are the same as a fingerprint of a currently written data block reaches a preset threshold, deduplication is triggered without being manually triggered by a user or periodically triggered, so that metadata such as a duplicate fingerprint in a memory can be deleted in a timely manner, thereby reducing memory overheads of metadata and ensuring system performance. In addition, a logical address and a physical address of the currently written data block may be written into an address mapping table, and a physical address of a deduplicated data block may be modified to a fingerprint. In this way, the deduplicated data block may be addressed by using two-level mapping, and a non-deduplicated data block may be addressed by using single-level mapping, so that a response time of the non-deduplicated data block is shortened.

It should be noted that a fingerprint and a logical address in the deduplicated inverse mapping table may be further written into a fingerprint table. In this way, the fingerprint table may store a fingerprint and a logical address of a data block existing after deduplication. A storage system may alternatively perform addressing by using the fingerprint table and a forward mapping table. Based on this, metadata in each partition in the inverse mapping table may be further evicted when the partition meets an eviction condition, to reduce a metadata size and reduce memory overheads.

To make the technical solutions of this application clearer and easier to understand, the following uses the storage system 120 shown in FIG. 1 as an example to describe the data deduplication method provided in this application.

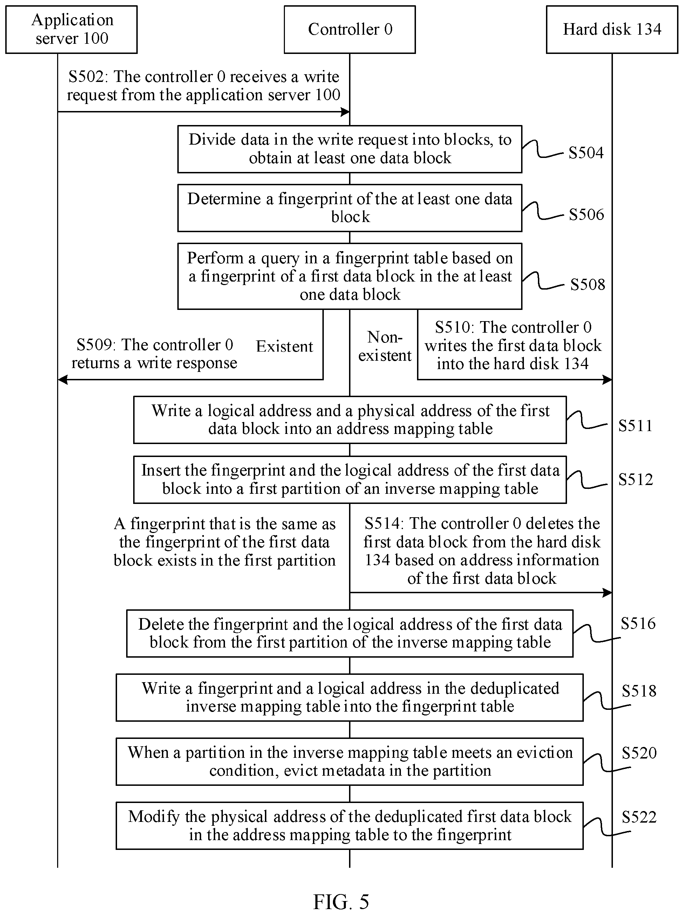

Referring to a flowchart of a data deduplication method shown in FIG. 5, the storage system 120 includes an engine 121 and a hard disk enclosure 130, and the engine 121 includes a controller 0 and a controller 1, either of which is a standby of the other. For ease of description, FIG. 5 provides an example for description from a perspective of the controller 0. The hard disk enclosure 130 includes a plurality of hard disks 134. The method includes the following steps.

S502: The controller 0 receives a write request from an application server 100.

The write request is a request for writing data. The write request includes data, and the write request is used to write the data into the hard disk 134 for persistent storage. The write request may be generated, based on a service requirement, by an application deployed on the application server 100. For example, a video application may be deployed on the application server 100. The video application may be a short video application or a long video application. The video application may generate a write request, where the write request includes a video stream uploaded by a user. For another example, a file management application may be deployed on the application server 100. The file management application may be a file manager. The file manager may generate a write request, where the write request includes a to-be-archived image.

In the example in FIG. 1, the controller 0 includes a processor 123 and a front-end interface 125. The processor 123 of the controller 0 may receive, by using the front-end interface 125, a write request forwarded by the application server 100 by using a switch 110.

S504: The controller 0 divides the data in the write request into blocks, to obtain at least one data block.

In this embodiment, the controller 0 may divide the data in the write request into blocks through fixed-size chunking or variable-size chunking, to obtain the at least one data block. Fixed-size chunking refers to dividing a data stream into blocks based on a set chunking granularity. Variable-size chunking refers to dividing a data stream into data blocks of unfixed sizes. Variable-size chunking may include sliding window chunking and content-based chunking (content-defined chunking, CDC).

For ease of understanding, the following uses fixed-size chunking as an example for description. Specifically, when a size of the data stream is an integer multiple of the chunking granularity, the controller 0 may evenly divide the data into one or more data blocks. When the size of the data is not an integer multiple of the chunking granularity, the controller 0 may pad the data, for example, pad zero at the end of the data, so that padded data is an integer multiple of the chunking granularity. Then the controller 0 evenly divides the data into one or more data blocks based on the chunking granularity. For example, when the size of the data is 19 KB, the controller 0 may pad zero at the end of the data, so that a size of padded data is 20 KB. Then the controller 0 performs chunking based on a chunking granularity of 4 KB, to obtain five data blocks whose sizes are 4 KB.

Considering that input/output (input/output, I/O) modes, I/O sizes, and feature requirements in different storage scenarios are different, the controller 0 may select a proper chunking policy based on the storage scenario to perform chunking. For example, in a primary storage scenario, an I/O is usually small, and an I/O mode is mainly random reading/writing, and the controller 0 may select fixed-size chunking. In a backup storage scenario, an I/O is usually large, an I/O mode is mainly sequential reading/writing, and the controller 0 may select variable-size chunking, to obtain a large deduplication ratio.

It should be noted that dividing data into blocks is an optional step of the data deduplication method in this embodiment of this application, and the foregoing step may not be performed in the data deduplication method in this embodiment of this application. For example, when the size of the data is equal to the chunking granularity or is less than the chunking granularity, the data may be directly used as a data block. For another example, when the size of the data is a fixed size, the data may also be directly used as a data block.

S506: The controller 0 determines a fingerprint of the at least one data block.

For any one of the at least one data block, the controller 0 may perform calculation based on content of the data block by using a message digest algorithm, to obtain a fingerprint of the data block. The fingerprint of the data block may be a message digest of the data block, for example, a hash value of the data block.

S508: The controller 0 performs a query in a fingerprint table based on a fingerprint of a first data block in the at least one data block, where when the fingerprint of the first data block exists in the fingerprint table, S509 is performed; or when the fingerprint of the first data block does not exist in the fingerprint table, S510, S511, and S512 are performed.

S509: The controller 0 returns a write response to the application server 100.

S510: The controller 0 writes the first data block into the hard disk 134.

The fingerprint table is used to record a fingerprint and address information of a data block stored in the hard disk 134. The address information may include a logical address. Further, the address information may include a physical address. The fingerprint and the address information may be stored in the fingerprint table in a form of a key value (key value, kv) pair. Specifically, storage may be performed in the fingerprint table by using the fingerprint as a key and the address information such as the logical address as a value.

The fingerprint and the address information recorded in the fingerprint table may come from an inverse mapping table. The inverse mapping table is a metadata management structure that stores a fingerprint and a logical address of a data block that has been written into the disk. Specifically, after the inverse mapping table triggers deduplication, the controller 0 may synchronize the deduplicated inverse mapping table to the fingerprint table, and specifically store, in the fingerprint table, metadata (for example, a fingerprint and a logical address) in the deduplicated inverse mapping table.

The fingerprint table stores a fingerprint of the data block that has been written into the disk. Therefore, inline deduplication can be supported, to reduce storage pressure of the hard disk 134. Specifically, the controller 0 may perform a query in the fingerprint table based on the fingerprint of the first data block. For example, the controller 0 may compare the fingerprint of the first data block with fingerprints in the fingerprint table, or the controller 0 may quickly search for a fingerprint based on the fingerprint of the first data block and an index of the fingerprint table.

When the fingerprint of the first data block exists in the fingerprint table, it indicates that a data block with same content has been written into the hard disk 134, and the controller 0 may perform S509 to directly return the write response.

The write response is used to indicate that the writing succeeds. When the fingerprint of the first data block does not exist in the fingerprint table, it indicates that no data block with same content is stored in the hard disk 134, and the controller 0 may perform S510 to write the first data block into the hard disk 134. Further, the controller 0 may also return a write response to the application server 100 after successfully writing the first data block into the hard disk 134.

It should be noted that the fingerprint table may be empty in an initial phase of a service. As the application server 100 continuously stores data in the hard disk 134, the inverse mapping table may record metadata of data blocks that have been written into the disk. When a partition in the inverse mapping table triggers deduplication, metadata in the deduplicated inverse mapping table may be synchronized to the fingerprint table. In this phase, the controller 0 may perform a query in the fingerprint table to implement inline deduplication. Compared with post-process deduplication, inline deduplication deletes duplicate data before data is written into the disk, without writing the duplicate data into a storage medium such as the hard disk 134, so that resource occupation is avoided.

Based on this, S508 and S509 may not be performed in the method in this embodiment of this application. For example, at an initial node of the service, the fingerprint table is empty, and the controller 0 may directly write data blocks into the disk for post-process deduplication, and support inline deduplication when a quantity of pieces of metadata records in the fingerprint table reaches a preset quantity. For another example, the controller 0 may not perform inline deduplication on a data block, but directly write the data block into the disk for post-process deduplication.

S511: The controller 0 writes a logical address and a physical address of the first data block into an address mapping table.

The address mapping table is used to store address information of a data block written into the hard disk 134. For example, the address mapping table may store a logical address and a physical address of the data block. During specific implementation, the logical address and the physical address may be stored in the address mapping table in a kv form. For ease of searching for or locating a data block, a mapping relationship from the logical address to the physical address may be stored in the address mapping table by using the logical address as a key and the physical address as a value. Therefore, the data block can be quickly addressed during subsequent access to the data block, and in addition, the operation can be recorded, which facilitates subsequent tracing or fault recovery.

Different from the inverse mapping table in which the logical address is used as a value, the address mapping table uses the logical address as a key, and therefore may also be referred to as a forward mapping table. It should be noted that if inline deduplication is performed on the first data block, it indicates that the first data block is not written into the hard disk 134, and there is no corresponding physical address. The controller 0 may store the logical address and the fingerprint of the first data block in the forward mapping table. When searching needs to be performed for the first data block, the fingerprint of the first data block may be searched for based on the forward mapping table, then the fingerprint table is searched to obtain a data block having a same fingerprint as the first data block, and a logical address of the data block having the same fingerprint is obtained. A physical address of the data block having the same fingerprint may be obtained based on the logical address of the data block having the same fingerprint by using the forward mapping table, and a data block having the same fingerprint may be accessed based on the physical address of the data block having the same fingerprint. Therefore, the first data block can be accessed.

It should be noted that a sequence of performing S510 and S511 is not limited. In some possible implementations, the controller 0 may first write the logical address and the physical address into the forward mapping table, and then write the first data block into a storage device such as the hard disk 134.

S512: The controller 0 inserts the fingerprint and the logical address of the first data block into a first partition of the inverse mapping table, where when a fingerprint that is the same as the fingerprint of the first data block exists in the first partition, S514 and S516 are performed.

The inverse mapping table is used to store a fingerprint and a logical address. The inverse mapping table may be a table structure organized in a form of a key value pair. The key value pair in the inverse mapping table is used to represent an inverse mapping relationship. Different from a mapping form from a logical address to a physical address in the address mapping table, the inverse mapping table is used to store an inverse mapping relationship from a fingerprint to a logical address. In the key value pair, a key is a fingerprint, and a value is a logical address. The controller 0 may sequentially insert the fingerprint and the logical address of the first data block into the inverse mapping table.

The controller 0 may perform N-way merge (N-Way Merge) sorting on the fingerprint of the first data block and fingerprints in the first partition in the inverse mapping table, and then insert the fingerprint and the logical address of the first data block into the first partition in the inverse mapping table based on sorting results.

N-way merge sorting means that to-be-sorted objects (for example, fingerprints of data blocks) are classified into a plurality of ways for sorting, and then sorting results of the ways are merged, to implement merge sorting. Assuming that a sorting result of each way may be denoted as an ordered small set $S = \{x | x_i \leq x_j, i, j \in [0, n)\}$ having n elements, and assuming that to-be-sorted fingerprints are classified into m ways, m small sets $S_1, S_2, ..., $ and $S_m$ may be merged to implement merge sorting. The controller 0 may determine minimum values in all the small sets based on the following formula, and write the minimum values into a large set:

$$\min = \min(\min(S_1), \min(S_2), \dots \min(S_m)) \tag{1}$$

Assuming that the minimum values in all the small sets are minimum values in the sets $S_i$. After writing the minimum values into the large set, the controller 0 may remove the minimum values from the sets $S_i$, and then continue to perform calculation based on Formula (1), to determine minimum values in all updated small sets, and write the minimum values into the large set. The controller 0 repeats the foregoing process until all elements in all the small sets are written into the large set, to complete merge sorting.

In some possible implementations, the controller 0 may sort the fingerprint of the first data block and fingerprints in the inverse mapping table by using a log structured merge tree (log structured merge tree, LSM tree), and then sequentially insert the fingerprint and the logical address of the first data block into the first partition of the inverse mapping table. Each partition of the inverse mapping table may maintain one LSM tree, so that metadata such as a fingerprint and a logical address to be written into the partition is sequentially inserted.

In this embodiment, the inverse mapping table includes a plurality of partitions, and the first partition may be determined based on a feature of the first data block. The feature of the first data block may be the fingerprint corresponding to the first data block. In some cases, a plurality of data blocks may correspond to a same fingerprint. For example, in a backup scenario, a plurality of data blocks may correspond to a same fingerprint. The controller 0 may determine heat of the fingerprint based on the fingerprint corresponding to the first data block, and then determine, based on the heat of the fingerprint corresponding to the first data block, the first partition that is in the plurality of partitions of the inverse mapping table and that corresponds to the heat. For example, the controller 0 may compare the heat of the fingerprint with preset heat. When the heat of the fingerprint is less than the preset heat, the controller 0 may determine that the first partition is a partition used to store metadata of cold data in the inverse mapping table, which is also referred to as a cold partition. When the heat of the fingerprint is greater than or equal to the preset heat, the controller 0 may determine that the first partition is a partition used to store hot data, which is also referred to as a hot partition. The cold partition may be a partition with a large capacity, and the hot partition may be a partition with a small capacity. A capacity of the cold partition is greater than a capacity of the hot partition. Then the controller 0 writes the fingerprint and the logical address of the first data block into the first partition.

Further, after the metadata such as the fingerprint and the logical address of the first data block is written into the first partition, the controller 0 may further update the heat of the fingerprint corresponding to the first data block, to determine a partition corresponding to a subsequently written data block having a same fingerprint. Specifically, the controller 0 may determine heat of the logical address of the first data block, and add the heat of the logical address to the heat of the fingerprint corresponding to the first data block, to update the heat of the fingerprint corresponding to the first data block.

For ease of understanding, the following provides descriptions with reference to an example. In this example, each time the controller 0 writes metadata of a data block, the controller 0 may update heat of a fingerprint corresponding to the data block. For example, the first data block written by the controller 0 into the hard disk 134 is a data block 10, and a fingerprint of the data block 10 is denoted as an FP 3. Because a data block having a same fingerprint has been written previously, and a data block whose fingerprint is the FP 3 and that is written last time is a data block 8, the controller 0 may obtain heat that is of the FP 3 and that is updated after metadata of the data block 8 is written. In this example, it is assumed that heat of the FP 3 is 5. The controller 0 may determine the first partition in the plurality of partitions of the inverse mapping table based on the heat. For example, the first partition may be a partition used to store metadata of cold data, which is also referred to as the cold partition. The controller 0 may further determine heat of a logical address of the data block 10. Assuming that the heat of the logical address is 2, the heat of the logical address may be added to heat of the fingerprint, to update the heat of the fingerprint. In this example, updated heat of the fingerprint may be 7.

As data blocks are continuously written, heat of fingerprints corresponding to the data blocks may change. Therefore, the controller 0 may further move metadata of a data block between different partitions based on heat of a fingerprint corresponding to the data block. For example, in an initial phase, heat of fingerprints corresponding to data blocks is usually low, and metadata of the data blocks may be written into the cold partition. As data blocks are continuously written, heat of some fingerprints continuously increases. When heat of a fingerprint of a data block is greater than the preset heat after the data block is written, the controller 0 may write metadata of the data block into the hot partition, and move metadata of a data block having a same fingerprint to the hot partition.

In some possible implementations, considering overheads of moving metadata between different partitions, the controller 0 may not move the metadata, but evict the metadata. For example, when heat of a fingerprint corresponding to a data block is greater than the preset heat after the data block is written, the controller 0 may write metadata of the data block into the hot partition, and evict metadata of a data block having a same fingerprint from the cold partition.

Further, the controller may trigger deduplication when a fingerprint that is the same as the fingerprint of the first data block exists in the first partition, or may trigger deduplication when a fingerprint that is the same as the fingerprint of the first data block exists in the first partition and a quantity of fingerprints in the first partition that are the same as the fingerprint of the first data block reaches a preset threshold, to perform S514 and S516.

The preset threshold may be set based on an empirical value. For example, the preset threshold may be set to 2. FIG. 4 is used as an example for description. In this example, if a quantity of fingerprints in a partition 1 (for example, the first partition) of the inverse mapping table that are the same as the fingerprint of the first data block reaches 2, deduplication may be triggered. For another example, the preset threshold may alternatively be set to 1, and in this case, deduplication may be triggered when a fingerprint that is the same as the fingerprint of the first data block exists. In other words, when a fingerprint that is the same as the fingerprint of the first data block exists in the first partition, the controller 0 may perform S514 and S516 to implement deduplication. However, a deduplication occasion is not limited in this embodiment of this application. For example, the controller 0 may trigger deduplication when a quantity of same fingerprints in the first partition reaches the preset threshold, or may trigger deduplication when a same fingerprint exists.

In this embodiment, the controller 0 directly writes the first data block into the hard disk 134, and then performs post-process deduplication. In this way, affecting normal running of a service due to consumption of computing resources and degrading storage performance due to a computing bottleneck are avoided.

It should be noted that the inverse mapping table is a new metadata management structure introduced in this embodiment. In another possible implementation of this embodiment of this application, the metadata management structure may alternatively be organized in another form.

S514: The controller 0 deletes the first data block from the hard disk 134 based on the address information of the first data block.

For data blocks having a same fingerprint, the controller 0 may retain one data block, and delete another data block having the same fingerprint from the hard disk 134. During specific implementation, the controller 0 may obtain the physical address of the first data block from the address mapping table based on the logical address of the first data block, then find the first data block from the storage device such as the hard disk 134 based on the physical address, and delete the first data block.

Further, when the preset threshold is greater than 1, the controller 0 may further retain one data block having a same fingerprint as the first data block, and delete another data block having the same fingerprint. Specifically, for data blocks having a same fingerprint, the controller 0 may retain a data block that is first written, and delete a data block that is written later.

S516: The controller 0 deletes the fingerprint and the logical address of the first data block from the first partition of the inverse mapping table.

Specifically, the controller 0 may search the inverse mapping table for the fingerprint of the first data block, and then delete the fingerprint and the logical address of the first data block. It should be noted that when the key-value pair of the fingerprint and the logical address in the inverse mapping table is stored in a form of an LSM tree, the controller 0 may delete the fingerprint of the first data block and the corresponding logical address through table merging.

Further, when the preset threshold is greater than 1, the controller 0 may further retain metadata of one data block having a same fingerprint as the first data block, and delete metadata of another data block having the same fingerprint. Specifically, for data blocks having a same fingerprint, the controller 0 may retain metadata of a data block that is first written, and delete metadata of a data block that is written later.

In addition, the controller 0 may perform S514 and S516 concurrently, or may perform S514 and S516 in a specified sequence. For example, the controller 0 may first perform S516, and then perform S514. A sequence of performing S514 and S516 is not limited in this embodiment.

It should be noted that the at least one data block may further include a second data block. Heat of a fingerprint corresponding to the second data block may be greater than the heat of the fingerprint corresponding to the first data block. For example, the second data block may be hot data, and the first data block may be cold data. Correspondingly, the controller 0 may write the second data block into the hard disk 134, and write metadata of the second data block, for example, the fingerprint and a logical address of the second data block, into a second partition in the plurality of partitions of the inverse mapping table. The second partition is specifically a hot partition used to store metadata of hot data. A capacity of the second partition is less than a capacity of the first partition.

Further, heat of fingerprints corresponding to data blocks may be alternatively classified into more types or levels. For example, the heat of the fingerprints may alternatively be classified into a hot level, a warm level, and a cold level. Correspondingly, the inverse mapping table may include more partitions. For example, the inverse mapping table may include a partition used to store metadata of hot data, a partition used to store metadata of warm data, and a partition used to store metadata of cold data.

S516 is an implementation of deleting the metadata of the first data block in the first partition in this embodiment of this application. When the metadata management structure is used to store a fingerprint, a logical address, and a physical address, the controller 0 may delete the fingerprint, the logical address, and the physical address of the first data block in the first partition of the metadata management structure.

S518: The controller 0 writes a fingerprint and a logical address in the deduplicated inverse mapping table into the fingerprint table.

Specifically, the controller 0 may further synchronously write metadata such as the fingerprint and the logical address in the deduplicated inverse mapping table into the fingerprint table. The controller 0 may synchronously write the metadata in the deduplicated inverse mapping table into the fingerprint table at a granularity of a partition. For example, after the first partition triggers deduplication, the controller 0 may synchronously write metadata that is of the first partition and that exists after deduplication into the fingerprint table, and after the second partition triggers deduplication, the controller 0 synchronously writes metadata that is of the second partition and that exists after deduplication into the fingerprint table. Considering that the partition may trigger a plurality of times of deduplication, to reduce resource occupation, the controller 0 may use an incremental synchronization mechanism to synchronously write metadata existing after deduplication into the fingerprint table.

S520: When at least one partition in the inverse mapping table meets an eviction condition, the controller 0 evicts metadata in the at least one partition.

Specifically, a water level used for eviction may be set for a partition in the inverse mapping table. When a quantity of resources occupied by metadata in the partition reaches the water level, the controller 0 may evict the metadata in the partition, to avoid metadata overflow. Because different partitions store fingerprints with different heat, water levels of the partitions may be different. For example, when the capacity of the first partition is 80% of a total capacity of the inverse mapping table, and the capacity of the second partition is 20% of the total capacity of the inverse mapping table, a water level of the first partition may be 70% of the total capacity of the inverse mapping table, and a water level of the first partition may be 10% of the total capacity of the inverse mapping table.

In some possible implementations, water levels of the partitions in the inverse mapping table may include a high water level and a low water level. When a quantity of resources occupied by metadata in a partition reaches the high water level, the metadata in the partition may be evicted, so that a quantity of resources occupied by metadata that is in the partition and that is obtained through eviction is not less than the low water level and is not greater than the high water level.

The controller 0 evicts metadata in a partition of the inverse mapping table, and in particular, evicts metadata in a partition corresponding to frequently updated hot data, so that a metadata size can be greatly reduced, and memory overheads can be reduced.

S522: The controller 0 modifies the physical address of the deduplicated first data block in the address mapping table to the fingerprint of the first data block.

Because the first data block has been deleted from the hard disk 134, it is difficult to locate the first data block based on the physical address in the address mapping table. Therefore, the controller 0 may modify the physical address of the deduplicated first data block in the address mapping table to the fingerprint of the first data block, to represent that the first data block is a deduplicated data block, so that a data block having a same fingerprint as the data block can be found by using the fingerprint table, and a physical address of the data block having the same fingerprint can be further determined. In this way, the deduplicated first data block can be addressed.

Based on this, a non-deduplicated data block can still be addressed based on the mapping relationship between the logical address and the physical address in the forward mapping table, without a need to perform two-level metadata mapping, so that an addressing time is greatly reduced, and further, a response time is shortened, and response efficiency is improved.

It should be noted that S518 to S522 are optional steps of this embodiment of this application. For example, when a memory is a large-capacity memory, the controller 0 may not perform the steps of writing data in the inverse mapping table into the fingerprint table and evicting metadata in the inverse mapping table.

Based on the foregoing content descriptions, in the data deduplication method provided in this application, the metadata management structure is actively partitioned, to perform differentiated processing on metadata of data with different update frequency. Sufficient quota resources can be allocated to infrequently updated data to support deduplication. Frequently updated data is frequently made ineffective, and therefore fewer quota resources are allocated. In this way, data that can be deduplicated finally can be deduplicated instead of being evicted due to occupation, so that a deduplication ratio is improved. In addition, data that is difficult to deduplicate can be evicted, so that an overall metadata mapping scale is reduced, and system performance is improved.

Further, the method further introduces a new metadata management structure, namely, the inverse mapping table. When a fingerprint that is the same as the fingerprint of the first data block exists in the first partition of the inverse mapping table, deduplication may be triggered without being manually triggered by a user or periodically triggered. In this way, deduplication can be performed in a timely manner, and a metadata size is reduced, so that memory overheads of metadata are reduced, and system performance is ensured. In addition, in the method, a logical address and a physical address of a data block written into the disk are recorded in the inverse mapping table, and a physical address of a deduplicated data block is modified to a fingerprint. In this way, a non-deduplicated data block can still be addressed through single-hop mapping, so that an addressing time is shortened, and response efficiency is improved.

A key in the embodiment shown in FIG. 5 is to partition the metadata management structure such as the inverse mapping table. A capacity of each partition of the metadata management structure may be determined based on a partitioning decision model. The partitioning decision model is used to predict a corresponding partitioning benefit after each of preset partition capacity combinations is applied to the metadata management structure, and determine a partition capacity combination with a largest partitioning benefit as capacities of the plurality of partitions of the metadata management structure.

The partition capacity combination represents capacities of all partitions in a group of partitions. A capacity of a partition refers to a quantity of resources allocated to the partition. A sum of capacities of all partitions in a group of partitions is equal to a total capacity of the metadata management structure. Based on this, the partition capacity combination may be represented by using actual capacities of partitions, or may be represented by using a capacity proportions of partitions.

For ease of description, the following uses an example in which the partition capacity combination is described by using the capacity proportion of partitions. For example, a partition capacity combination may be represented as 80%:20%, to represent that the metadata management structure includes two partitions whose capacities are respectively 80% and 20% of a total capacity. For another example, a partition capacity combination may be represented as 60%:30%: 10%, to represent that the metadata management structure includes three partitions whose capacities are respectively 60%, 30%, and 10% of a total capacity.

The partitioning benefit is a benefit obtained after the metadata management structure is partitioned. For example, after the metadata management structure is partitioned, a deduplication ratio can be improved. Therefore, the partitioning benefit may be the deduplication ratio.

The partitioning decision model may estimate a hit rate of data to predict the deduplication ratio. For ease of description, a first partition capacity combination in the preset partition capacity combinations is used as an example for description. The partitioning decision model may predict, in the following manner, a corresponding deduplication ratio after the first partition capacity combination is applied to the metadata management structure:

obtaining a workload feature corresponding to each of a plurality of partitions formed when the first partition capacity combination is applied to the metadata management structure; then obtaining, based on the workload feature corresponding to each partition, a data distribution corresponding to each partition; and then obtaining the deduplication ratio based on the data distribution corresponding to each partition and a capacity of each partition.

Further, considering that a workload may change, adjustment to the capacities of the partitions is further supported. The workload may be a task that is using or waiting to use a computing resource such as a CPU in a period of time. During peak hours, a large quantity of tasks are using or waiting to use the computing resource such as the CPU, and the workload is large. During off-peak hours, a small quantity of tasks are using or waiting to use the computing resource such as the CPU, and the workload is small. Based on this, the controller 0 may adjust the partitions. In a specific engineering implementation process, operations such as partition initialization need to be performed again during partition adjustment. This generates a partition adjustment cost. Based on this, the partitioning benefit may be determined based on at least one of a return and the partition adjustment cost.

In some possible implementations, the controller 0 may periodically adjust the capacities of the plurality of partitions of the metadata management structure. Each cycle may also be referred to as a partition adjustment cycle. When an adjustment moment arrives, the controller 0 may determine, based on a partitioning benefit, a partition capacity combination, or a workload feature corresponding to each partition that corresponds to a cycle (for example, a previous partition adjustment cycle) before the adjustment moment, whether to adjust the capacities of the plurality of partitions. The workload feature is a feature extracted from workload information. For example, the workload feature may include one or more of a reuse distance, a reuse cycle, and reuse frequency.

For ease of understanding, the following describes in detail a partitioning process in the data deduplication method in embodiments of this application with reference to the accompanying drawings. For ease of description, the following still uses partitioning an inverse mapping table as an example for description.

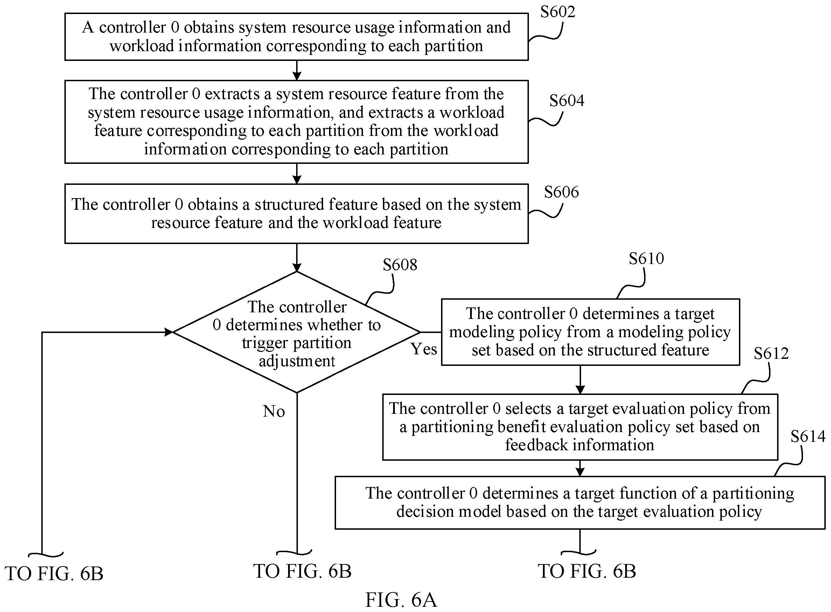

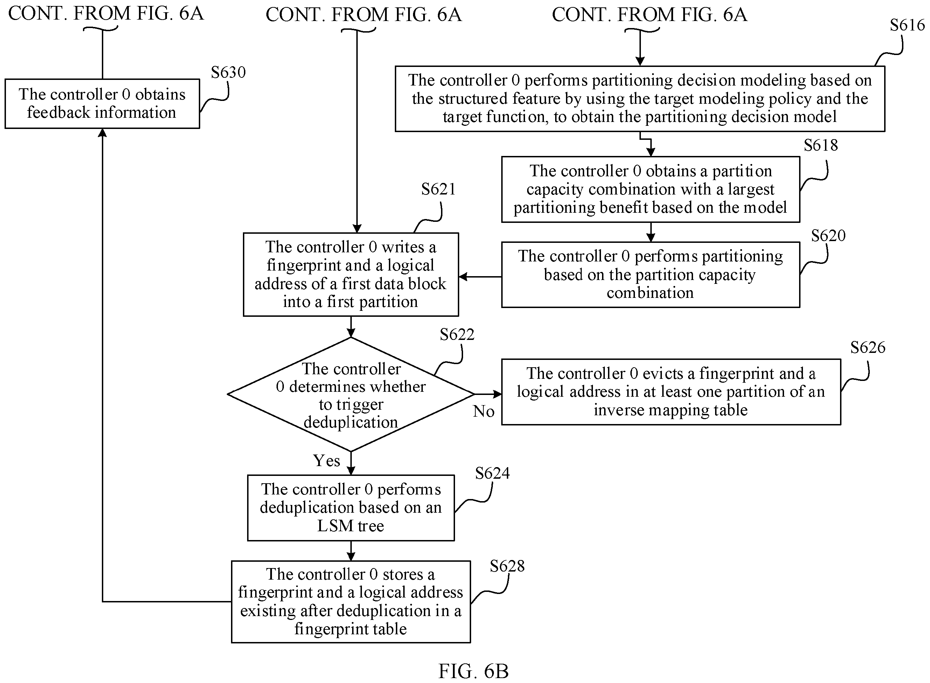

Referring to a flowchart of a data deduplication method shown in FIG. 6A and FIG. 6B, based on the embodiment shown in FIG. 5, after writing a first data block into a hard disk 134, a controller 0 may further perform the following steps.

S602: The controller 0 obtains system resource usage information and workload information corresponding to each partition in a previous partition adjustment cycle.

A system resource includes one or more of a computing resource (for example, a processor resource such as a CPU), a memory resource, a disk resource, and a network resource. Therefore, the system resource usage information includes a CPU occupation proportion, a memory occupation proportion, a disk I/O amount, and a bandwidth occupation amount.

A workload (workload) is a task that is using or waiting to use a computing resource such as a CPU in a period of time. The task may be data writing. Based on this, the workload information may include one or more of a reuse distance (Reuse Distance), a reuse cycle, or reuse frequency of data. The reuse distance may be a quantity of access times between two adjacent accesses to same data. Statistics about the reuse distance may be collected at a granularity of a data block. The reuse cycle may be a quantity of write requests between two adjacent accesses to same data in different write requests. The reuse frequency may be a reciprocal of the reuse cycle. It should be noted that when obtaining workload information such as reuse distances, reuse cycles, or reuse frequency, the controller 0 may extract a reuse distance, a reuse cycle, or reuse frequency for each partition, to obtain workload information corresponding to each partition.

S604: The controller 0 extracts a system resource feature from the system resource usage information, and extracts a workload feature corresponding to each partition from the workload information corresponding to each partition.

Specifically, the controller 0 may vectorize the system resource usage information to obtain the system resource feature, and vectorize the workload information to obtain the workload feature. For ease of understanding, the following uses vectorization of the CPU occupation proportion and the reuse distance as an example for description.

When vectorizing the CPU occupation proportion, the controller 0 may compare the CPU occupation proportion with a CPU occupation threshold. The CPU proportion threshold may be set based on historical service experience. For example, the CPU occupation threshold may be set to 70%. When the CPU occupation proportion is greater than the CPU occupation threshold, "1" may be output, and when the CPU occupation proportion is not greater than the CPU occupation threshold, "0" may be output. For details, refer to the following formula:

$$F(CPU\ occupation) = \begin{cases} 1, CPU\ occupation \geq 70\% \\ 0, CPU\ occupation < 70\% \end{cases} \tag{2}$$

F represents a feature, and F may be represented by using a vector.

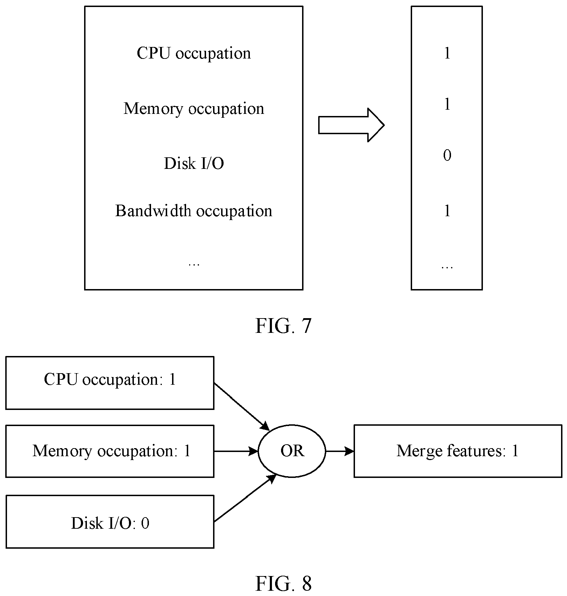

Similarly, referring to a schematic diagram of system resource feature extraction shown in FIG. 7, the controller 0 may compare system resource usage information such as a memory occupation proportion, a disk I/O amount, and a bandwidth occupation amount with thresholds corresponding to the resource, and output, based on a comparison result, system resource features, for example, F(memory occupation), F(disk I/O amount), and F(bandwidth occupation amount), corresponding to the system resource usage information.

When the reuse distance is vectorized, reuse distances of a current batch of data (for example, data blocks included in data in a current write request) may be added, and then a reuse distance mean and variance are calculated, specifically as follows:

$$mean_{\text{reuse distance}} = \frac{1}{N} \sum_{i=0}^{N} d_{\text{reuse distance}}$$

$$variance_{\text{reuse distance}} = \frac{1}{N} \sum_{i=0}^{N} (d_{\text{reuse distance}} - mean_{\text{reuse distance}})^2 \tag{3}$$

Similarly, the controller 0 may collect statistics on the reuse cycle by using a statistics collection method the same as that for processing the reuse distance, to fully mine a temporal association and a spatial association in the workload information, so that the workload features are extracted from the workload information.

It should be noted that S602 and S604 are an optional implementation of this embodiment of this application, and S602 and S604 may not be performed in the method in this embodiment of this application. For example, alternatively, the controller 0 may not obtain the system resource usage information or extract the system resource feature.

S606: The controller 0 obtains a structured feature based on the system resource feature and the workload feature.

The structured feature includes the system resource feature and the workload feature. The system resource feature is extracted from the system resource usage information, and the workload feature is extracted from the workload information. The controller 0 may integrate the system resource feature and the workload feature to obtain the structured feature. For example, the controller 0 may splice the system resource feature and the workload feature, to implement integration to obtain the structured feature.

The controller 0 may further merge system resource features. Through analysis from a service perspective, if occupation of a system resource is excessively high at some moments, a system performance bottleneck occurs, and in this case, system resource features of a same type (also referred to as associated features and features with common impact) are no longer required. Such features may be merged. As shown in FIG. 8, the controller 0 may implement feature merging by using an "OR" operation. For example, F(CPU occupation), F(memory occupation), F(disk I/O amount), and F(bandwidth occupation) belong to features with common impact, and the controller 0 may merge the features with common impact.

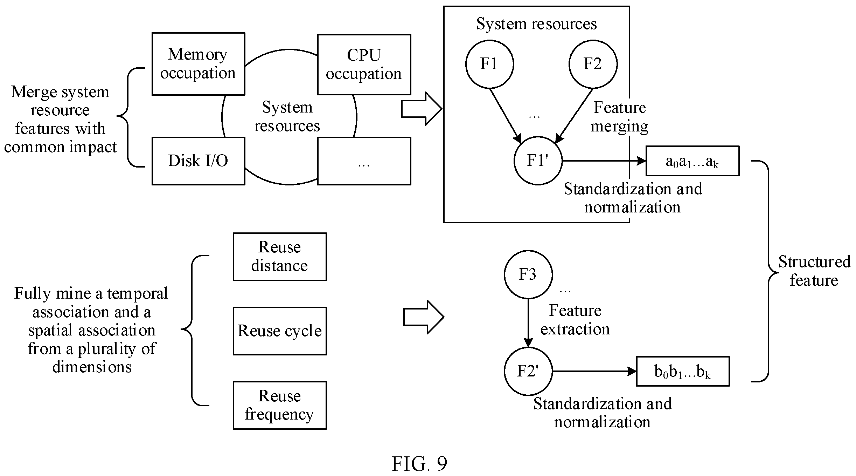

As shown in FIG. 9, the controller 0 obtains workload features and system resource features with common impact through multi-source information processing. After merging the features with common impact, the controller 0 may standardize and normalize the features with common impact. Similarly, after extracting the workload features, the controller 0 may standardize and normalize the workload features. Standardized and normalized system resource features may be $a_0 a_1 \cdots a_k$, and standardized and normalized workload features may be $b_0 b_1 \cdots b_k$. The controller 0 may splice the system resource features $a_0 a_1 \cdots a_k$ and the workload features $b_0 b_1 \cdots b_k$, to obtain a structured feature.

The controller 0 cleans the features by using general feature processing means such as feature merging and normalization, so that a feature model that accurately describes a current situation can be generated at low computing overheads, to provide a reliable basis for partitioning decision.

S602 to S606 are an implementation in which the controller 0 obtains the structured feature. In another possible implementation of this embodiment of this application, the controller 0 may obtain the structured feature in another manner. Further, when the controller 0 does not obtain the system resource usage information or extract the system resource feature from the system resource usage information, the controller 0 may not perform S606.

S608: The controller 0 obtains feedback information of a previous partition adjustment cycle, and determines, based on the feedback information of the previous partition adjustment cycle, whether to trigger partition adjustment, where if yes, S610 is performed; or if no, S622 is performed.

The controller 0 may set a trigger condition for partition adjustment. The controller 0 may determine, based on the feedback information of the previous partition adjustment cycle, for example, a partitioning benefit (for example, a deduplication ratio) and a workload feature corresponding to each partition in the previous partition adjustment cycle, whether the trigger condition for partition adjustment is met, to determine whether to trigger partition adjustment.

For a current partition adjustment cycle, the trigger condition for partition adjustment may be set as follows: A deduplication ratio of the previous partition adjustment cycle is less than a preset value or a decrease amplitude reaches a preset amplitude, or a change of a workload feature of the previous partition adjustment cycle relative to a workload feature of a previous to previous partition adjustment cycle meets a preset condition. The preset value, the preset amplitude, or the preset condition may be set based on historical service experience.

For example, the workload feature of the previous to previous partition adjustment cycle indicates that a workload is mainly a large I/O, and the workload feature of the previous partition adjustment cycle indicates that a workload is mainly a small I/O, in other words, the workload feature of the previous partition adjustment cycle changes greatly compared with the workload feature of the previous to previous partition adjustment cycle, and partition adjustment may be triggered.

It should be noted that S608 may not be performed in the data deduplication method in this embodiment of this application. For example, the controller 0 may directly trigger partition adjustment, to perform partition update based on a partitioning decision modeling result.

S610: The controller 0 determines a target modeling policy from a modeling policy set based on the structured feature.

S612: The controller 0 selects a target evaluation policy from a partitioning benefit evaluation policy set based on the structured feature and the feedback information.

S614: The controller 0 determines a target function of the partitioning decision model based on the target evaluation policy.

S616: The controller 0 performs partitioning decision modeling based on the structured feature by using the target modeling policy and the target function, to obtain the partitioning decision model.

S618: The controller 0 obtains a partition capacity combination with a largest partitioning benefit based on the partitioning decision model.

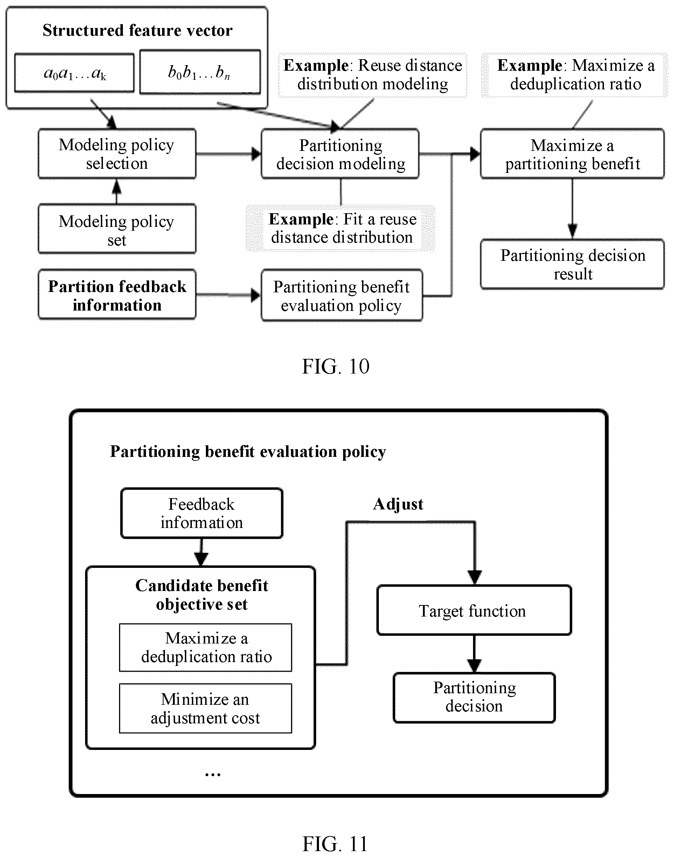

The controller 0 may perform partitioning decision modeling based on the structured feature obtained through multi-source information processing, and complete partitioning decision with assistance of prior knowledge, for example, previous feedback information such as the workload feature and the deduplication ratio of the previous partition adjustment cycle. As shown in FIG. 10, the controller 0 may perform modeling policy selection from the modeling policy set based on the structured feature, to determine the target modeling policy, perform evaluation policy selection from the partitioning benefit evaluation policy set based on the feedback information such as the workload feature and the deduplication ratio of the previous partition adjustment cycle, to determine the target evaluation policy, and determine the target function of the partitioning decision model based on the target evaluation policy. Then the controller 0 may perform modeling based on the structured feature by using the target modeling policy and the target function, and further obtain the partition capacity combination with the largest partitioning benefit based on the partitioning decision model obtained through modeling. The partition capacity combination with the largest partitioning benefit may also be referred to as a partitioning decision.

To make the technical solutions of this application clearer and easier to understand, the following describes processes such as modeling policy selection, evaluation policy selection, and partitioning decision modeling with reference to an example.

A case in which a workload is large and a system resource occupation proportion is large is used as an example.

In this example, a modeling policy set includes: ①a partition dotting-based modeling policy; and ② a modeling policy based on Gaussian process regression. The partition dotting-based modeling policy is applicable to a common scenario, namely, a simple scenario. The modeling policy based on Gaussian process regression is applicable to a complex scenario. Partition dotting refers to providing a plurality of preset partition capacity combinations, and selecting a partition capacity combination with a largest partitioning benefit from the preset partition capacity combinations.

In this example, a workload feature in a structured feature vector reflects that the service scenario is a simple scenario. In addition, a flag bit related to a CPU occupation feature is 1, representing that occupation of a system resource such as a CPU is high. To prevent partitioning decision modeling from occupying a large quantity of system resources, the controller 0 may choose to perform modeling based on the partition dotting-based modeling policy.

In this example, it is assumed that a reuse distance distribution of the workload follows a normal distribution, as shown below:

$$f(d_{\text{reuse distance}}) = \frac{1}{\sqrt{2\pi}\sigma} \exp\left(-\frac{(d_{\text{reuse distance}} - \mu)^2}{2\sigma^2}\right) \tag{4}$$

$\sigma$ represents a variance, and $\mu$ represents a mean. The controller 0 may fit a reuse distance probability density function by using a mean $\mu_{\text{reuse distance mean}}$ of reuse distances and a variance $\sigma_{\text{reuse distance variance}}$ of the reuse distances in the structured feature obtained through multi-source information processing. For details, refer to the following formula:

$$\begin{aligned} &f(d_{\text{reuse distance}}) \\ &= \frac{1}{\sqrt{2\pi}\sigma_{\text{reuse distance variance}}} \exp\left(-\frac{(d_{\text{reuse distance}} - \mu_{\text{reuse distance mean}})^2}{2\sigma^2}\right) \end{aligned} \tag{5}$$

In this example, two partitions are provided as an example for description. The two partitions are specifically a hot partition corresponding to frequently updated data and a cold partition corresponding to infrequently updated data. The controller 0 may set the following partition combinations based on the partition dotting-based modeling policy:

**Table 1 Partition combinations**

| Hot partition proportion | 10% | 20% | 30% | 40% | 50% | 60% | 70% | 80% | 90% |
|---|---|---|---|---|---|---|---|---|---|
| Cold partition proportion | 90% | 80% | 70% | 60% | 50% | 40% | 30% | 20% | 10% |

With reference to the reuse distance probability density function in Formula (5), the controller 0 may obtain hit rates of two types of data distributions through integration, and then obtain, by using products of the hit rates and data proportions, a deduplication ratio obtained by using the partitioning solution, as shown below:

$$f(P) = P * \int F1 + (1 - P) * \int F2 \tag{6}$$

F1 and F2 respectively represent data distributions corresponding to the two partitions, and may be specifically represented by using probability density functions of reuse distances of data corresponding to the two partitions, where P is a capacity proportion of one partition.

In this example, the controller 0 may select, as a target evaluation policy, an evaluation policy of "maximizing a deduplication ratio" from a partitioning benefit evaluation policy set based on the structured feature. In other words, the controller 0 may directly use the function of Formula (6) as a target function to perform partitioning decision modeling. Specifically, the controller 0 substitutes parameters of different partition combinations into the target function, to obtain deduplication ratios of the different partition combinations, and the controller 0 selects a partition capacity combination with a largest deduplication ratio from the partition combinations.

In the foregoing example, an example in which evaluation policy selection is directly performed based on the structured feature is used for description. In some possible implementations, the controller 0 may further reconstruct the partitioning benefit evaluation policy with reference to other constraints. For example, in a specific engineering implementation process, a change amplitude of partition sizes in two consecutive times should not be excessively large. Otherwise, partition deployment performance is affected, and unnecessary overheads are caused. Based on this, the other constraints may include minimizing a partition adjustment cost. A reconstructed partitioning benefit evaluation policy may be an evaluation policy based on the deduplication ratio and the partitioning adjustment cost.

As shown in FIG. 11, the controller 0 may obtain feedback information of a previous partition adjustment cycle. The feedback information may include one or more of a workload feature and a deduplication ratio. The controller 0 may adjust a partitioning benefit evaluation policy based on the feedback information. Specifically, if the deduplication ratio of the previous partition adjustment cycle is less than a preset value or a decrease amplitude reaches a preset amplitude, the controller 0 may adjust the partitioning benefit evaluation policy to an evaluation policy that is based on the deduplication ratio and a partition adjustment cost. Similarly, if a change of the workload feature of the previous partition adjustment cycle relative to a workload feature of a previous to previous partition adjustment cycle meets a preset condition, the controller 0 may adjust the partitioning benefit evaluation policy to an evaluation policy that is based on the deduplication ratio and a partition adjustment cost.

Compared with the evaluation policy based on the deduplication ratio, the evaluation policy based on the deduplication ratio and the partition adjustment cost considers a plurality of factors and is more pertinent. Therefore, a selected partition capacity combination also has a higher partitioning benefit.

When the partitioning benefit evaluation policy is adjusted to the evaluation policy based on the deduplication ratio and the partitioning adjustment cost, the target function may be adjusted from Formula (6) to the following:

$$f(P) = P * \int F1 + (1 - P) * \int F2 - \left\| P - P_{current\ partition\ proportion} \right\|^2 \qquad (7)$$

S610 to S616 are an implementation in which the controller 0 constructs the partitioning decision model based on the workload feature of the previous partition adjustment cycle. S618 is an implementation of determining a partitioning decision (specifically, a target partition combination). It should be noted that when modeling the partitioning decision model, the controller 0 may not perform S612 or S614. For example, the controller 0 may perform partitioning decision modeling based on the target modeling policy and a default target function, to obtain the partitioning decision model.

S620: The controller 0 partitions the inverse mapping table based on the partition capacity combination with the largest partitioning benefit.

The partition capacity combination includes capacity proportions of different partitions, namely, proportions of resources allocated to the different partitions. For example, the partition capacity combination may include a proportion of resources allocated to a hot partition and a proportion of resources allocated to a cold partition. The controller 0 may partition system resources in the inverse mapping table based on the proportion of the resources allocated to the hot partition and the proportion of the resources allocated to the cold partition.

For example, if the proportion of the resources allocated to the hot partition in the partition capacity combination is 20%, and the proportion of the resources allocated to the cold partition is 80%, the controller 0 may allocate 20% storage space in the inverse mapping table to the hot partition, and allocate 80% storage space in the inverse mapping table to the cold partition.

S620: The controller 0 writes a fingerprint and a logical address of the first data block into a first partition.

The first partition is a partition determined from a plurality of partitions based on a feature of the first data block. For example, when the fingerprint corresponding to the first data block has high heat, the first partition may be a hot partition; or when the fingerprint corresponding to the first data block has low heat, the first partition may be a cold partition.

For a specific implementation in which the controller 0 writes the fingerprint and the logical address of the first data block into the first partition, refer to related content descriptions in the embodiment shown in FIG. 5. Details are not described herein again.

S622: The controller 0 determines whether to trigger deduplication, where if yes, S624 is performed; or if no, S626 is performed.

Referring to related content descriptions in the embodiment shown in FIG. 5, the controller 0 may compare the fingerprint of the first data block with fingerprints in the first partition of the inverse mapping table, and may trigger deduplication when a fingerprint that is the same as the fingerprint of the first data block exists in the first partition. For example, when a quantity of fingerprints in the first partition that are the same as the fingerprint of the first data block reaches a preset threshold, S624 may be performed to perform deduplication.

S624: The controller 0 performs deduplication based on an LSM tree.

The controller 0 may deduplicate the fingerprint and the logical address in the first partition by merging LSM trees, and deduplicate a corresponding data block from the hard disk 134 based on a physical address corresponding to the logical address. For example, the controller 0 may delete the fingerprint and the logical address of the first data block in the first partition by merging the LSM trees, and delete the first data block from the hard disk 134 based on a physical address corresponding to the logical address of the first data block. For a specific implementation of performing deduplication based on the LSM tree, refer to related content descriptions of S514 to S516 in the embodiment shown in FIG. 5. Details are not described herein again.

S626: The controller 0 evicts a fingerprint and a logical address in at least one partition of the inverse mapping table.

A corresponding eviction condition may be set for each partition in the inverse mapping table. When a partition in the inverse mapping table meets a corresponding eviction condition, metadata such as a fingerprint and a logical address in the partition may be evicted. Specifically, in each partition, the controller 0 may determine, based on a partition capacity and heat of a fingerprint corresponding to a data block, metadata that needs to be evicted, for example, a fingerprint and a logical address of non-deduplicated metadata and a fingerprint and a logical address of some deduplicated metadata, and then evict the metadata from the inverse mapping table. In this way, a metadata size can be reduced, and system performance can be ensured.

S628: The controller 0 stores a fingerprint and a logical address existing after deduplication in a fingerprint table.

S630: The controller 0 obtains feedback information of a current partition adjustment cycle, so that the controller 0 determines whether to trigger partition adjustment in a next partition adjustment cycle.

In this embodiment, the controller 0 may obtain the feedback information, to assist in partitioning decision adjustment and improve partitioning precision.

It should be noted that S628 to S630 are optional steps of this embodiment of this application, and the foregoing steps may not be performed in the data deduplication method in this embodiment of this application.

Based on the foregoing content descriptions, the data deduplication method in this embodiment of this application provides an active partitioning mechanism to change implicit partitioning to active partitioning. For example, an inverse mapping table is divided into a hot partition and a cold partition, and system resources of corresponding quotas are allocated to the hot partition and the cold partition. Sufficient storage space can be allocated to infrequently updated data to support deduplication. Frequently updated data is frequently made ineffective, and therefore fewer quota resources are allocated. In this way, data that can be deduplicated finally can be deduplicated instead of being evicted due to occupation, so that a deduplication ratio is improved. In addition, data that is difficult to deduplicate can be evicted, so that an overall metadata mapping scale is reduced, and system performance is improved.

FIG. 6A and FIG. 6B are mainly described by using an example in which the controller 0 performs modeling by using the partition dotting-based modeling policy in the simple scenario. In the complex scenario, the controller 0 may also perform modeling by using the modeling policy based on Gaussian process regression. The following describes a modeling process in the complex scenario.

In machine learning, a machine learning algorithm usually predicts an optimal output value y based on an input value x for a classification or regression task. In this case, y is considered as a common variable. In some cases, a task does not need to predict a function value, but provides a posterior probability distribution of the function value. The posterior probability distribution is denoted as $p_{(y|x)}$. In this case, the function value y may be considered as a random variable. Gaussian process regression (Gaussian Process Regression, GPR) is performing Bayesian modeling on a group of function values of a function whose expression is unknown (also referred to as a black box function) to provide a probability distribution of the function values.

When Gaussian process regression is used to model a partitioning policy model, the problem may be described as properly allocating resource proportions configured for partitions to obtain a largest deduplication ratio on a premise that partition configuration resources are limited. To better describe the problem, in this embodiment, a partition capacity combination S is used to describe a resource proportion of each partition. S is an n-dimensional array, and an $i^{th}$ element Si represents a resource proportion of an $i^{th}$ partition. On a premise that other factors remain unchanged, it may be considered that a deduplication ratio is determined by S. In this case, a relationship between the deduplication ratio and the partition capacity combination may be defined as f(S). Because f(S) cannot be explicitly obtained, in this embodiment, f(S) is depicted by using the modeling policy of Gaussian process regression.

Modeling f(S) based on the modeling policy of Gaussian process regression may include the following phases:

Initialization phase: The controller 0 randomly generates several partition capacity combinations, and adds the partition capacity combinations to a set Set. Then the controller 0 separately applies the partition capacity combinations to a storage system, and obtains deduplication ratios in configurations of the partition capacity combinations through running of the storage system. Based on a correspondence between the partition capacity combination and the deduplication ratio, a Gaussian model G between the partition capacity combination and the deduplication ratio is preliminarily established to depict f(S).

Iterative update phase: The Gaussian model G recommends a partition capacity combination, and adds the partition capacity combination to the set Set. The controller 0 applies the partition capacity combination to the storage system, and obtains a deduplication ratio in the configuration through running of the storage system. The controller 0 feeds back the partition capacity combination and the deduplication ratio corresponding to the partition capacity combination to the Gaussian model for model update, and repeats an iterative update step L times (L is a preset quantity of iterations).

Output phase: A group of partition resource configurations corresponding to a largest deduplication ratio in the set Set is output.

In this way, modeling can be performed based on the modeling policy of Gaussian process regression in the complex scenario, and the group of partition resource configurations, namely, a target partition combination, with the largest deduplication ratio can be provided based on the Gaussian model.

To make the technical solutions of this application clearer and easier to understand, the following describes an example in which the data deduplication method in embodiments of this application is applied to a storage system having a global cache (global cache).

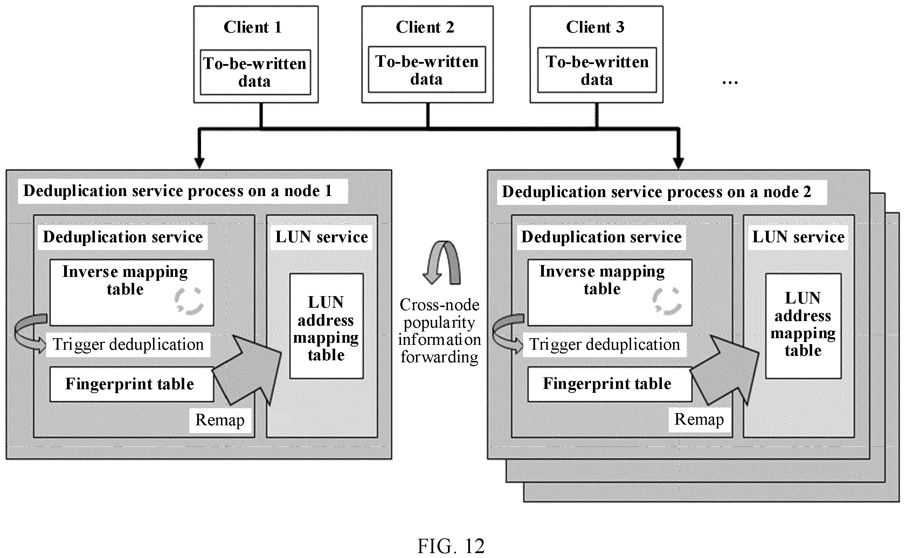

Referring to a schematic diagram of an application scenario of a data deduplication method shown in FIG. 12, for a distributed storage system with disaggregated storage, a client running on at least one host is connected to a plurality of storage nodes. The storage nodes such as a node 1 and a node 2 may start a deduplication service process to perform a data deduplication method. The storage node may further pull up a LUN service process to assist the deduplication service process in performing the data deduplication method.

Specifically, the client may send a write request. The write request includes data, and the data may be divided into at least one piece of data. For a data block, the storage node may first record data location information in a forward mapping table, and then perform a data writing operation. Then the deduplication service process on the storage node such as the node 1 may perform the data deduplication method to identify and deduplicate redundant data in a storage medium such as a disk, to greatly improve an available capacity of a user and reduce costs of the user.

When data is written into the disk, the storage node sequentially inserts a fingerprint and a logical address of the data block into an inverse mapping table through asynchronous writing. The inverse mapping table is a fingerprint metadata management structure introduced in this application. For data with different update frequency, the storage node performs effective management by separately constructing data structures of LSM trees. The structures can trigger deduplication through table merging. After completing deduplication, the deduplication service process of the storage node sends metadata existing after deduplication in the inverse mapping table to the fingerprint table, and correspondingly updates physical address information of deduplicated data in the forward mapping table (namely, a LUN address mapping table) to a fingerprint.

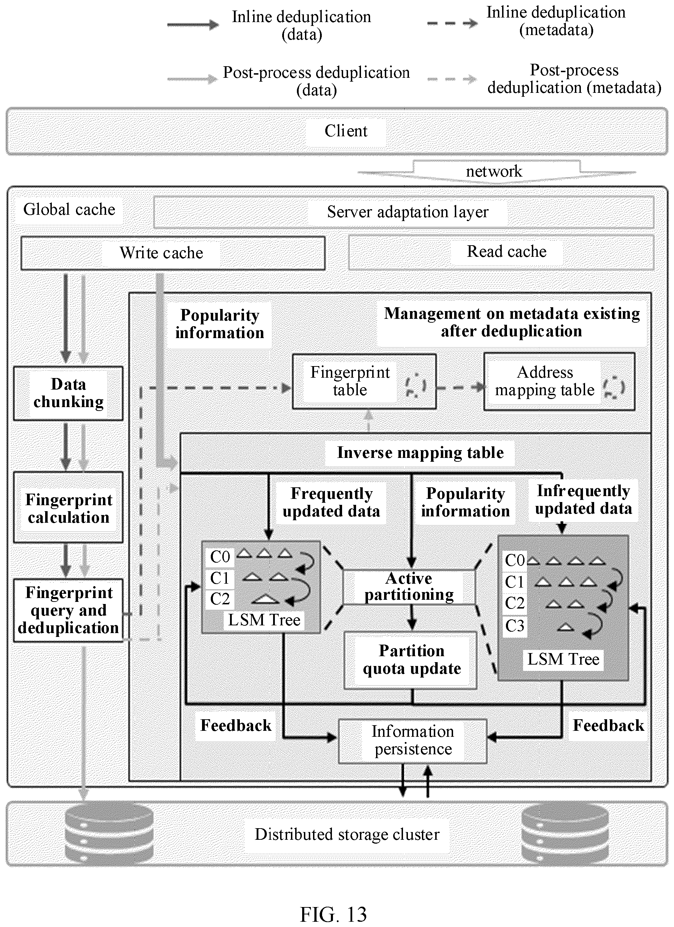

Next, referring to a schematic flowchart of applying a data deduplication method to a storage system having a global cache shown in FIG. 13, an upper layer of the global cache has a write cache and a read cache. The write cache may be used for heat statistics collection of an LBA, and no additional statistics collection module needs to be designed for heat statistics collection.

As shown in FIG. 13, a client may send a write request by using a network, the write request reaches the write cache through a server adaptation layer of the global cache, and a deduplication service process may divide data in the write request into blocks, and then calculate a fingerprint of each data block. Then the deduplication service process performs a query in a fingerprint table. If a fingerprint of a data block is hit in the fingerprint table, it indicates that a storage device stores a data block having a same fingerprint, and the deduplication service process may directly return a write response. If a fingerprint of a data block is not hit in the fingerprint table, it indicates that a storage device does not store a data block having a same fingerprint, and the deduplication service process may write the data block into the storage device such as a hard disk, and then return a write response.

The deduplication service process may further sequentially insert the fingerprint and a logical address of the data block into an inverse mapping table. In addition, the deduplication service process may further obtain heat of LBAs from the write cache through batch obtaining, and update heat of fingerprints corresponding to data blocks based on the heat of the LBAs. The deduplication service process may further obtain a workload feature such as a reuse distance and a reuse cycle, obtain system resource usage information, and obtain a system resource feature based on the system resource usage information. The deduplication service process performs general feature processing based on the feature, to obtain a structured feature.

The deduplication service process performs partitioning decision modeling based on the structured feature, and further determines a partition capacity combination with a largest partitioning benefit based on a partitioning decision model obtained through modeling. The deduplication service process partitions system resources in the inverse mapping table based on the partition capacity combination, and specifically, partitions the system resources in the inverse mapping table based on a proportion of resources allocated to a hot partition and a proportion of resources allocated to a cold partition. The deduplication service process separately constructs data structures of LSM trees in different partitions to effectively manage metadata such as fingerprints and logical addresses. For example, the deduplication service process may trigger deduplication by performing table merging based on the LSM trees. The deduplication service process may further determine, based on a partition capacity and heat of a fingerprint corresponding to a data block, metadata that needs to be evicted, and evict the metadata from the LSM tree of the inverse mapping table, to reduce a metadata size.

In this example, after completing deduplication, the deduplication service process may further send metadata existing after deduplication in the inverse mapping table to the fingerprint table, and correspondingly update a physical address corresponding to deduplicated data in an address mapping table to a fingerprint by using a LUN service process. Further, the deduplication service process may further obtain feedback information, to determine, based on the feedback information, whether to trigger partition adjustment in a subsequent phase such as a next partition adjustment cycle, so that more accurate partitioning can be implemented, thereby improving a deduplication ratio.

Based on the data deduplication method provided in embodiments of this application, an embodiment of this application further provides a data deduplication apparatus. The following describes data deduplication apparatuses in embodiments of this application from a perspective of function modularization with reference to the accompanying drawings.

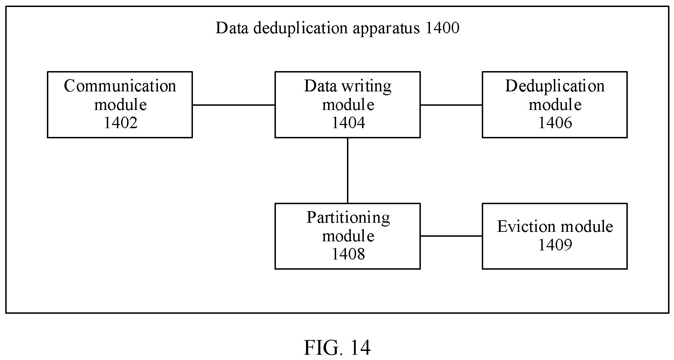

Referring to a schematic diagram of a structure of a data deduplication apparatus shown in FIG. 14, an apparatus 1400 includes:

> a communication module 1402, configured to receive a write request, where the write request includes a first data block;
>
> a data writing module 1404, configured to write the first data block into a storage device, where the data writing module 1404 is further configured to write metadata of the first data block into a first partition in a plurality of partitions of a metadata management structure, where the first partition is determined based on a feature of the first data block, and the metadata of the first data block includes a fingerprint and address information of the first data block; and
>
> a deduplication module 1406, configured to delete the metadata of the first data block in the first partition and delete the first data block from the storage device based on the address information of the first data block when a fingerprint that is the same as the fingerprint of the first data block exists in the first partition.

The communication module 1402 may be configured to implement related content descriptions of S502 in the embodiment shown in FIG. 5. The data writing module 1404 is configured to implement related content descriptions of S510 in the embodiment shown in FIG. 5, and the data writing module 1404 is further configured to implement related content descriptions of S512 in the embodiment shown in FIG. 5. The deduplication module 1406 is configured to implement related content descriptions of S514 and S516 in the embodiment shown in FIG. 5.

In some possible implementations, the feature of the first data block is the fingerprint corresponding to the first data block, and the data writing module 1404 is specifically configured to:

> determine heat of the fingerprint corresponding to the first data block;
>
> determine, based on the heat of the fingerprint corresponding to the first data block, the first partition that is in the plurality of partitions of the metadata management structure and that corresponds to the heat; and
>
> write the metadata of the first data block into the first partition.

For an implementation in which the data writing module 1404 determines the heat of the fingerprint corresponding to the first data block, determines the first partition based on the heat, and writes the metadata into the first partition, refer to related content descriptions of S506 and S512 in the embodiment shown in FIG. 5. Details are not described herein again.

In some possible implementations, the data writing module 1404 is further configured to:

> after writing the metadata of the first data block into the first partition, determine heat of a logical address of the first data block; and
>
> add the heat of the logical address to the heat of the fingerprint corresponding to the first data block, to update the heat of the fingerprint corresponding to the first data block.

For an implementation in which the data writing module 1404 updates the heat, refer to related content descriptions in the embodiment shown in FIG. 5. Details are not described herein again.

In some possible implementations, the write request further includes a second data block, heat of a fingerprint corresponding to the second data block is greater than the heat of the fingerprint corresponding to the first data block, and the data writing module 1404 is further configured to:

write the second data block into the storage device, and write metadata of the second data block into a second partition in the plurality of partitions of the metadata management structure, where a capacity of the second partition is less than a capacity of the first partition.

For a specific implementation in which the data writing module 1404 writes the second data block and the metadata of the second data block, refer to related content descriptions of writing the first data block and the metadata of the first data block. Details are not described herein again.

In some possible implementations, capacities of the plurality of partitions of the metadata management structure are determined based on a partitioning decision model, the partitioning decision model is used to predict a corresponding partitioning benefit after each of preset partition capacity combinations is applied to the metadata management structure, and determine a partition capacity combination with a largest partitioning benefit as the capacities of the plurality of partitions of the metadata management structure, and the partitioning benefit is determined based on at least one of a deduplication ratio and a partition adjustment cost.

In some possible implementations, the partitioning benefit is the deduplication ratio, and the preset partition capacity combinations include a first partition capacity combination. The apparatus 1400 further includes a partitioning module 1408. The partitioning module 1408 is configured to predict, in the following manner, a corresponding deduplication ratio after the first partition capacity combination is applied to the metadata management structure:

obtaining a workload feature corresponding to each of a plurality of partitions formed when the first partition capacity combination is applied to the metadata management structure;

obtaining, based on the workload feature corresponding to each partition, a data distribution corresponding to each partition; and

obtaining the deduplication ratio based on the data distribution corresponding to each partition and a capacity of each partition.

For a specific implementation in which the partitioning module 1408 constructs the partitioning decision model, refer to related content descriptions of S610 to S616 in the embodiment shown in FIG. 6A and FIG. 6B. Details are not described herein again.

In some possible implementations, the apparatus 1400 further includes a partitioning module 1408, and the partitioning module 1408 is configured to:

periodically adjust the capacities of the plurality of partitions of the metadata management structure; and

when an adjustment moment arrives, determine, based on a partitioning benefit, a partition capacity combination, or a workload feature corresponding to each partition that corresponds to a cycle before the adjustment moment, whether to adjust the capacities of the plurality of partitions.

In some possible implementations, the deduplication module 1406 is specifically configured to:

when a fingerprint that is the same as the fingerprint of the first data block exists in the first partition, and a quantity of fingerprints in the first partition reaches a preset threshold, delete the metadata of the first data block, and delete the first data block from the storage device based on the address information of the first data block.

The deduplication module 1406 is configured to implement related content descriptions of S514 and S516 in the embodiment shown in FIG. 5. Details are not described herein again.

In some possible implementations, the address information of the first data block is the logical address of the first data block, and the data writing module 1404 is further configured to:

write the logical address and a physical address of the first data block into an address mapping table; and the deduplication module 1406 is specifically configured to:

obtain the physical address of the first data block from the address mapping table based on the logical address of the first data block; and

find the first data block from the storage device based on the physical address, and delete the first data block.

The data writing module 1404 is further configured to implement related content descriptions of S518 in the embodiment shown in FIG. 5. Details are not described herein again.

In some possible implementations, the deduplication module 1406 is further configured to:

after deleting the metadata of the first data block in the first partition, modify the physical address of the first data block in the address mapping table to the fingerprint of the first data block.

The deduplication module 1406 is further configured to implement related content descriptions of S518 in the embodiment shown in FIG. 5. Details are not described herein again.

In some possible implementations, the apparatus 1400 further includes:

an eviction module 1409, configured to: when at least one partition in an inverse mapping table meets an eviction condition, evict metadata in the at least one partition.

The eviction module 1409 is further configured to implement related content descriptions of S520 in the embodiment shown in FIG. 5. Details are not described herein again.

The data deduplication apparatus 1400 according to this embodiment of this application may correspondingly perform the methods described in embodiments of this application, and the foregoing and other operations and/or functions of the modules/units of the data deduplication apparatus 1400 are separately intended to implement corresponding procedures of the methods in the embodiments shown in FIG. 5 and FIG. 6A and FIG. 6B. For brevity, details are not described herein again.

An embodiment of this application further provides a computer-readable storage medium. The computer-readable storage medium may be any usable medium that can be stored by a computer, or a data storage device, such as a data center, including one or more usable media. The usable medium may be a magnetic medium (for example, a floppy disk drive, a hard disk drive, or a magnetic tape), an optical medium (for example, a DVD), a semiconductor medium (for example, a solid-state drive), or the like. The computer-readable storage medium includes instructions, and the instructions instruct a computing device or a computing device cluster (for example, a storage system) to perform the foregoing data deduplication method.

An embodiment of this application further provides a computer program product. The computer program product includes one or more computer instructions. When the computer instructions are loaded and executed on a computer, all or some of the procedures or functions according to embodiments of this application are generated. The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner. The computer program product may be a software installation package. When any one of the foregoing data deduplication methods needs to be used, the computer program product may be downloaded and executed on a computing device or a computing device cluster.

The foregoing descriptions of procedures or structures corresponding to the accompanying drawings have respective focuses. For a part that is not described in detail in a procedure or a structure, refer to related descriptions of other procedures or structures.

## Claims

1. A data deduplication method, wherein the method comprises:

   receiving a write request, wherein the write request comprises a first data block;
   writing the first data block into a storage device;
   writing metadata of the first data block into a first partition in a plurality of partitions of a metadata management structure, wherein the first partition is determined based on a feature of the first data block, and the metadata of the first data block comprises a fingerprint and address information of the first data block; and
   deleting the metadata of the first data block in the first partition and deleting the first data block from the storage device based on the address information of the first data block when a fingerprint that is the same as the fingerprint of the first data block exists in the first partition.

2. The method according to claim 1, wherein the feature of the first data block is the fingerprint corresponding to the first data block, and the writing metadata of the first data block into a first partition in a plurality of partitions of a metadata management structure comprises:

   determining heat of the fingerprint corresponding to the first data block;
   determining, based on the heat of the fingerprint corresponding to the first data block, the first partition that is in the plurality of partitions of the metadata management structure and that corresponds to the heat; and
   writing the metadata of the first data block into the first partition.

3. The method according to claim 2, wherein after the writing the metadata of the first data block into the first partition, the method further comprises:

   determining heat of a logical address of the first data block; and
   adding the heat of the logical address to the heat of the fingerprint corresponding to the first data block, to update the heat of the fingerprint corresponding to the first data block.

4. The method according to any one of claims 1 to 3, wherein the write request further comprises a second data block, heat of a fingerprint corresponding to the second data block is greater than the heat of the fingerprint corresponding to the first data block, and the method further comprises:
   writing the second data block into the storage device, and writing metadata of the second data block into a second partition in the plurality of partitions of the metadata management structure, wherein a capacity of the second partition is less than a capacity of the first partition.

5. The method according to any one of claims 1 to 4, wherein capacities of the plurality of partitions of the metadata management structure are determined based on a partitioning decision model, the partitioning decision model is used to predict a corresponding partitioning benefit after each of preset partition capacity combinations is applied to the metadata management structure, and determine a partition capacity combination with a largest partitioning benefit as the capacities of the plurality of partitions of the metadata management structure, and the partitioning benefit is determined based on at least one of a deduplication ratio and a partition adjustment cost.

6. The method according to claim 5, wherein the partitioning benefit is the deduplication ratio, the preset partition capacity combinations comprise a first partition capacity combination, and the partitioning decision model predicts, in the following manner, a corresponding deduplication ratio after the first partition capacity combination is applied to the metadata management structure:

obtaining a workload feature corresponding to each of a plurality of partitions formed when the first partition capacity combination is applied to the metadata management structure;
obtaining, based on the workload feature corresponding to each partition, a data distribution corresponding to each partition; and
obtaining the deduplication ratio based on the data distribution corresponding to each partition and a capacity of each partition.

7. The method according to claim 5 or 6, wherein the method further comprises:

periodically adjusting the capacities of the plurality of partitions of the metadata management structure; and
when an adjustment moment arrives, determining, based on a partitioning benefit, a partition capacity combination, or a workload feature corresponding to each partition that corresponds to a cycle before the adjustment moment, whether to adjust the capacities of the plurality of partitions.

8. The method according to any one of claims 1 to 7, wherein the deleting the metadata of the first data block in the first partition and deleting the first data block from the storage device based on the address information of the first data block when a fingerprint that is the same as the fingerprint of the first data block exists in the first partition comprises: when a fingerprint that is the same as the fingerprint of the first data block exists in the first partition, and a quantity of fingerprints in the first partition reaches a preset threshold, deleting the metadata of the first data block, and deleting the first data block from the storage device based on the address information of the first data block.

9. The method according to any one of claims 1 to 8, wherein the address information of the first data block is the logical address of the first data block, and the method further comprises:

writing the logical address and a physical address of the first data block into an address mapping table; and
the deleting the first data block from the storage device based on the address information of the first data block comprises:

obtaining the physical address of the first data block from the address mapping table based on the logical address of the first data block; and
finding the first data block from the storage device based on the physical address, and deleting the first data block.

10. The method according to claim 9, wherein after the deleting the metadata of the first data block in the first partition, the method further comprises:
modifying the physical address of the first data block in the address mapping table to the fingerprint of the first data block.

11. The method according to claim 9, wherein the method further comprises:
when at least one partition of the metadata management structure meets an eviction condition, evicting metadata in the at least one partition.

12. A data deduplication apparatus, wherein the apparatus comprises:

a communication module, configured to receive a write request, wherein the write request comprises a first data block;
a data writing module, configured to write the first data block into a storage device, wherein the data writing module is further configured to write metadata of the first data block into a first partition in a plurality of partitions of a metadata management structure, wherein the first partition is determined based on a feature of the first data block, and the metadata of the first data block comprises a fingerprint and address information of the first data block; and
a deduplication module, configured to delete the metadata of the first data block in the first partition and delete the first data block from the storage device based on the address information of the first data block when a fingerprint that is the same as the fingerprint of the first data block exists in the first partition.

13. The apparatus according to claim 12, wherein the feature of the first data block is the fingerprint corresponding to the first data block, and the data writing module is specifically configured to:

determine heat of the fingerprint corresponding to the first data block;
determine, based on the heat of the fingerprint corresponding to the first data block, the first partition that is in the plurality of partitions of the metadata management structure and that corresponds to the heat; and
write the metadata of the first data block into the first partition.

14. The apparatus according to claim 13, wherein the data writing module is further configured to:

after writing the metadata of the first data block into the first partition, determine heat of a logical address of the first data block; and
add the heat of the logical address to the heat of the fingerprint corresponding to the first data block, to update the heat of the fingerprint corresponding to the first data block.

15. The apparatus according to any one of claims 12 to 14, wherein the write request further comprises a second data block, heat of a fingerprint corresponding to the second data block is greater than the heat of the fingerprint corresponding to the first data block, and the data writing module is further configured to:
write the second data block into the storage device, and write metadata of the second data block into a second partition in the plurality of partitions of the metadata management structure, wherein a capacity of the second partition is less than a capacity of the first partition.

16. The apparatus according to any one of claims 12 to 15, wherein capacities of the plurality of partitions of the metadata management structure are determined based on a partitioning decision model, the partitioning decision model is used to predict a corresponding partitioning benefit after each of preset partition capacity combinations is applied to the metadata management structure, and determine a partition capacity combination with a largest partitioning benefit as the capacities of the plurality of partitions of the metadata management structure, and the partitioning benefit is determined based on at least one of a deduplication ratio and a partition adjustment cost.

17. The apparatus according to claim 16, wherein the partitioning benefit is the deduplication ratio, the preset partition capacity combinations comprise a first partition capacity combination, and the partitioning decision model predicts, in the following manner, a corresponding deduplication ratio after the first partition capacity combination is applied to the metadata management structure:

obtaining a workload feature corresponding to each of a plurality of partitions formed when the first partition capacity combination is applied to the metadata management structure;
obtaining, based on the workload feature corresponding to each partition, a data distribution corresponding to each partition; and
obtaining the deduplication ratio based on the data distribution corresponding to each partition and a capacity of each partition.

18. The apparatus according to claim 16 or 17, wherein the apparatus further comprises a partitioning module, and the partitioning module is configured to:

periodically adjust the capacities of the plurality of partitions of the metadata management structure; and
when an adjustment moment arrives, determine, based on a partitioning benefit, a partition capacity combination, or a workload feature corresponding to each partition that corresponds to a cycle before the adjustment moment, whether to adjust the capacities of the plurality of partitions.

19. The apparatus according to any one of claims 12 to 18, wherein the deduplication module is specifically configured to:
when a fingerprint that is the same as the fingerprint of the first data block exists in the first partition, and a quantity of fingerprints in the first partition reaches a preset threshold, delete the metadata of the first data block, and delete the first data block from the storage device based on the address information of the first data block.

20. The apparatus according to any one of claims 12 to 19, wherein the address information of the first data block is the logical address of the first data block, and the data writing module is further configured to:

write the logical address and a physical address of the first data block into an address mapping table; and the deduplication module is specifically configured to:

obtain the physical address of the first data block from the address mapping table based on the logical address of the first data block; and

find the first data block from the storage device based on the physical address, and delete the first data block.

21. The apparatus according to claim 20, wherein the deduplication module is further configured to:
after deleting the metadata of the first data block in the first partition, modify the physical address of the first data block in the address mapping table to the fingerprint of the first data block.

22. The apparatus according to claim 20, wherein the apparatus further comprises:
an eviction module, configured to: when at least one partition in an inverse mapping table meets an eviction condition, evict metadata in the at least one partition.

23. A storage system, wherein the storage system comprises at least one processor and at least one storage, the at least one storage stores computer-readable instructions, and the at least one processor executes the computer-readable instructions, so that the storage system performs the method according to any one of claims 1 to 11.

24. A computer-readable storage medium, comprising computer-readable instructions, wherein the computer-readable instructions are used to implement the method according to any one of claims 1 to 11.

25. A computer program product, comprising computer-readable instructions, wherein the computer-readable instructions are used to implement the method according to any one of claims 1 to 11.

Application server
100

Application server
100

Switch 110

Switch 110

Storage system 120

Engine 121

Controller 0

Front-end interface 125

Processor 123

Memory 124

Back-end interface 126

Front-end interface 125

Processor 123

Memory 124

Back-end interface 126

Controller 1

Hard disk enclosure 130

Hard disk 134

Hard disk 134

Hard disk 134

...

Hard disk 134

FIG. 1

FIG. 2

Log file

Sort and
merge

Fingerprint file

Deduplicate

Fingerprint
file

FIG. 3

FIG. 4

| Application server 100 | Controller 0 | Hard disk 134 |
|---|---|---|

S502: The controller 0 receives a write request from the application server 100

Divide data in the write request into blocks, to obtain at least one data block — S504

Determine a fingerprint of the at least one data block — S506

Perform a query in a fingerprint table based on a fingerprint of a first data block in the at least one data block — S508

S509: The controller 0 returns a write response — Existent | Non-existent | S510: The controller 0 writes the first data block into the hard disk 134

Write a logical address and a physical address of the first data block into an address mapping table — S511

Insert the fingerprint and the logical address of the first data block into a first partition of an inverse mapping table — S512

A fingerprint that is the same as the fingerprint of the first data block exists in the first partition | S514: The controller 0 deletes the first data block from the hard disk 134 based on address information of the first data block

Delete the fingerprint and the logical address of the first data block from the first partition of the inverse mapping table — S516

Write a fingerprint and a logical address in the deduplicated inverse mapping table into the fingerprint table — S518

When a partition in the inverse mapping table meets an eviction condition, evict metadata in the partition — S520

Modify the physical address of the deduplicated first data block in the address mapping table to the fingerprint — S522

FIG. 5

A controller 0 obtains system resource usage information and workload information corresponding to each partition — S602

The controller 0 extracts a system resource feature from the system resource usage information, and extracts a workload feature corresponding to each partition from the workload information corresponding to each partition — S604

The controller 0 obtains a structured feature based on the system resource feature and the workload feature — S606

The controller 0 determines whether to trigger partition adjustment — S608

Yes

The controller 0 determines a target modeling policy from a modeling policy set based on the structured feature — S610

The controller 0 selects a target evaluation policy from a partitioning benefit evaluation policy set based on feedback information — S612

The controller 0 determines a target function of a partitioning decision model based on the target evaluation policy — S614

No

TO FIG. 6B

TO FIG. 6B

TO FIG. 6B

FIG. 6A

CONT. FROM FIG. 6A  CONT. FROM FIG. 6A  CONT. FROM FIG. 6A

S616

The controller 0 performs partitioning decision modeling based on the structured feature by using the target modeling policy and the target function, to obtain the partitioning decision model

S630

The controller 0 obtains feedback information

S618

The controller 0 obtains a partition capacity combination with a largest partitioning benefit based on the model

S621

The controller 0 writes a fingerprint and a logical address of a first data block into a first partition

S620

The controller 0 performs partitioning based on the partition capacity combination

S622

The controller 0 determines whether to trigger deduplication

S626

The controller 0 evicts a fingerprint and a logical address in at least one partition of an inverse mapping table

No

Yes

S624

The controller 0 performs deduplication based on an LSM tree

S628

The controller 0 stores a fingerprint and a logical address existing after deduplication in a fingerprint table

FIG. 6B

EP 4 513 348 A1

36

CPU occupation

Memory occupation

Disk I/O

Bandwidth occupation

...

1

1

0

1

...

FIG. 7

CPU occupation: 1

Memory occupation: 1

Disk I/O: 0

OR

Merge features: 1

FIG. 8

Merge system resource features with common impact

Memory occupation

CPU occupation

System resources

Disk I/O

...

System resources

F1    F2

...    Feature merging

F1'    $a_0a_1...a_k$

Standardization and normalization

Fully mine a temporal association and a spatial association from a plurality of dimensions

Reuse distance

Reuse cycle

Reuse frequency

F3

...    Feature extraction

F2'    $b_0b_1...b_k$

Standardization and normalization

Structured feature

FIG. 9

**Structured feature vector**

$a_0 a_1 \dots a_k$

$b_0 b_1 \dots b_n$

**Example**: Reuse distance distribution modeling

**Example**: Maximize a deduplication ratio

Modeling policy selection

Partitioning decision modeling

Maximize a partitioning benefit

Modeling policy set

**Example**: Fit a reuse distance distribution

Partitioning decision result

**Partition feedback information**

Partitioning benefit evaluation policy

FIG. 10

**Partitioning benefit evaluation policy**

Feedback information

**Adjust**

**Candidate benefit objective set**

Maximize a deduplication ratio

Minimize an adjustment cost

...

Target function

Partitioning decision

FIG. 11

FIG. 12

FIG. 13

Data deduplication apparatus 1400

| Communication module 1402 | Data writing module 1404 | Deduplication module 1406 |

| Partitioning module 1408 | Eviction module 1409 |

FIG. 14

## INTERNATIONAL SEARCH REPORT

| | International application No. |
|---|---|
| | **PCT/CN2023/101303** |

**A. CLASSIFICATION OF SUBJECT MATTER**

G06F16/174(2019.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, ENTXT, DWPI, CNKI: 重删, 去重, 指纹, 摘要, 哈希, 散列, 元数据, 地址, 分区, deduplication, fingerprint, hash, meta, address, partition

**C. DOCUMENTS CONSIDERED TO BE RELEVANT**

| Category* | Citation of document, with indication, where appropriate, of the relevant passages | Relevant to claim No. |
|---|---|---|
| Y | CN 110618789 A (HUAWEI TECHNOLOGIES CO., LTD.) 27 December 2019 (2019-12-27) description, paragraphs [0062]-[0083] and [0102]-[0103] | 1-4, 8-15, 19-25 |
| Y | CN 107329692 A (MACROSAN TECHNOLOGIES CO., LTD.) 07 November 2017 (2017-11-07) description, paragraphs [0090] and [0107]-[0109] | 1-4, 8-15, 19-25 |
| A | CN 103514250 A (YI LETIAN et al.) 15 January 2014 (2014-01-15) entire document | 1-25 |
| A | CN 111381779 A (SANGFOR TECHNOLOGIES INC.) 07 July 2020 (2020-07-07) entire document | 1-25 |
| A | US 2020133547 A1 (EMC IP HOLDING CO. LLC.) 30 April 2020 (2020-04-30) entire document | 1-25 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 September 2023** | **12 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/101303**

| Patent document cited in search report | | | Publication date (day/month/year) | Patent family member(s) | | | Publication date (day/month/year) |
|---|---|---|---|---|---|---|---|
| CN | 110618789 | A | 27 December 2019 | WO | 2021027541 | A1 | 18 February 2021 |
| | | | | US | 2022164316 | A1 | 26 May 2022 |
| | | | | EP | 4016276 | A1 | 22 June 2022 |
| CN | 107329692 | A | 07 November 2017 | None | | | |
| CN | 103514250 | A | 15 January 2014 | None | | | |
| CN | 111381779 | A | 07 July 2020 | None | | | |
| US | 2020133547 | A1 | 30 April 2020 | None | | | |

Form PCT/ISA/210 (patent family annex) (July 2022)

**REFERENCES CITED IN THE DESCRIPTION**

**Patent documents cited in the description**

- CN 202210730080
- CN 202211132110